(19) Europäisches Patentamt / European Patent Office / Office européen des brevets

(11) **EP 4 620 258 B1**

(12) **EUROPEAN PATENT SPECIFICATION**

(45) Date of publication and mention
of the grant of the patent:
**10.06.2026 Bulletin 2026/24**

(21) Application number: **23887284.0**

(22) Date of filing: **16.02.2023**

(51) International Patent Classification (IPC):
*H04W 74/0833* (2024.01)    *H04B 7/06* (2006.01)

(52) Cooperative Patent Classification (CPC):
**H04W 74/0833; H04B 7/06952**

(86) International application number:
**PCT/CN2023/076560**

(87) International publication number:
**WO 2024/098573 (16.05.2024 Gazette 2024/20)**

(54) **SYSTEMS, METHODS, AND NON-TRANSITORY PROCESSOR-READABLE MEDIA FOR TRANSMISSION DURING RANDOM ACCESS PROCEDURE**

SYSTEME, VERFAHREN UND NICHTTRANSITORISCHE PROZESSORLESBARE MEDIEN ZUR ÜBERTRAGUNG WÄHREND EINES DIREKTZUGRIFFSVERFAHRENS

SYSTÈMES, PROCÉDÉS ET SUPPORTS NON TRANSITOIRES LISIBLES PAR PROCESSEUR POUR UNE TRANSMISSION PENDANT UNE PROCÉDURE D'ACCÈS ALÉATOIRE

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR

(43) Date of publication of application:
**24.09.2025 Bulletin 2025/39**

(73) Proprietor: ZTE Corporation
Shenzhen, Guangdong 518057 (CN)

(72) Inventors:
• LIU, Xing
Shenzhen, Guangdong 518057 (CN)
• HAN, Xianghui
Shenzhen, Guangdong 518057 (CN)
• ZHANG, Junfeng
Shenzhen, Guangdong 518057 (CN)
• KOU, Shuaihua
Shenzhen, Guangdong 518057 (CN)
• YAO, Ke
Shenzhen, Guangdong 518057 (CN)
• ZHANG, Nan
Shenzhen, Guangdong 518057 (CN)
• GAO, Bo
Shenzhen, Guangdong 518057 (CN)

(74) Representative: Vossius & Partner
Patentanwälte Rechtsanwälte mbB
Siebertstraße 3
81675 München (DE)

(56) References cited:
WO-A1-2021/221551    WO-A1-2022/205070
WO-A1-2022/205070    CN-A- 112 753 269
US-A1- 2022 053 433

• QUALCOMM INCORPORATED: "Enhancements to support NR backhaul links", 3GPP DRAFT; R1-1804835, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sanya, CHINA; 20180416 - 20180420, 15 April 2018 (2018-04-15), Mobile Competence Centre ; 650, route des Lucioles ; F-06921 Sophia-Antipolis Cedex ; France , XP051427101

**Description**

TECHNICAL FIELD

The invention relates to a wireless communication method and to a wireless communication device.

BACKGROUND

Network deployment forms continue to change and evolve on the basis of traditional network deployment. One cell may include a plurality of Transmit-Receive Points (TRPs) in the same or different geographical locations. Some TRPs may support both downlink (DL) transmission and uplink (UL) reception. Some TRPs may support only part of transmission types, for example, only UL reception (e.g., UL only TRP, UL TRP, UL only cell, etc.). In this network deployment mode, UL only TRP can be used to expand the uplink coverage and the uplink capacity. Another network deployment includes a forwarding-based network, where special relay nodes (e.g., Relay, Integrated Access Backhaul (IAB), Network Controlled Repeater (RN), etc.) are deployed to amplify and forward the received signals between a base station (BS) and user equipment (UE), thereby expanding the UL and DL coverage area of the BS. However, these network deployments face issues relating to performing Physical Random Access Channel (PRACH) transmission when the UL and DL transmit and receive nodes are different, such as transmission resource configuration, transmission timing, transmission power determining, how the relay node forwards the initial access-related signal channel (e.g., Synchronization Signal/Physical Broadcasting Channel (SS/PBCH) Block (SSB), PRACH, etc.). WO 2022/205070 A1 and US 2022/053433 A1 are documents of the related art.

SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. In some arrangements, systems, methods, apparatuses, and non-transitory computer-readable media for performing, by a wireless communication device (e.g., UE, etc.), a Random Access Channel (RACH) procedure involving a first node (e.g., UL TRP, etc.) and a second node (e.g., BS, etc.), wherein the wireless communication device receives downlink data from the second node, selecting, by the wireless communication device, a first RACH mode or a second RACH mode, wherein the first RACH mode comprises transmitting, by the wireless communication device to the first node, a Physical Random Access Channel, PRACH; and the second RACH mode comprises transmitting, by the wireless communication device, the PRACH to the second node, and communicating by the wireless communication device with the second node through the first node.

The above and other aspects and their implementations are described in greater detail in the drawings, the descriptions, and the claims.

BRIEF DESCRIPTION OF THE DRAWINGS

Various example arrangements of the present solution are described in detail below with reference to the following figures or drawings. The drawings are provided for purposes of illustration only and merely depict example arrangements of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.

FIG. 1 is a diagram illustrating an example cellular communication network, in accordance with some arrangements.
FIG. 2 illustrates block diagrams of an example UL device, an example UE device, and an example BS device, in accordance with some arrangements.
FIG. 3 illustrates an example scheme implemented for supporting the initial access.
FIG. 4 is a table illustrating an example mapping relationship between PRACH Configuration Index, preamble formats, system frame number (SFN), subframe number, starting symbol, number of PRACH slots within a subframe, number of time-domain PRACH occasions within a PRACH slot, and PRACH duration, according to various arrangements.
FIG. 5 is a table illustrating an example mapping relationship between preamble subcarrier spacing (SCS) and $N_{gap}$ symbols, according to various arrangements.
FIG. 6 is a diagram illustrating an example wireless communication system including UL only TRP, in accordance with some arrangements.

FIG. 7 is a diagram illustrating an example network deployment including forwarding-based network, in accordance with some arrangements.

FIGS. 8A and 8B are flowchart diagrams illustrating example methods for performing a RACH procedure involving multiple nodes, according to various arrangements.

FIG. 9 is a diagram illustrating an example combination of transmitting (Tx) and receiving (Rx) to identify the best or acceptable Tx/Rx beam pair, in accordance with some arrangements.

FIG. 10 is a diagram illustrating an example cellular communication network including transmission delays (T1, T2, T3), in accordance with some arrangements.

FIG. 11 is a diagram illustrating an example timeline of reception and transmission timings, in accordance with some arrangements.

FIG. 12 is a table illustrating an example mapping relationship between Synchronization Signal Reference Signal Received Power (SS-RSRP) measurement result and a power offset (P_offset), according to various arrangements.

FIG. 13 is a table illustrating another example mapping relationship between SS-RSRP and P_offset, according to various arrangements.

FIG. 14 is a diagram illustrating an example SSB transmission, according to various arrangements.

FIG. 15 is a table illustrating an example mapping relationship between a refined-SSB index, a SFN, and a half frame, according to various arrangements.

FIG. 16 is a table illustrating another example mapping relationship between the refined-SSB index and the SFN, according to various arrangements.

FIG. 17 is a diagram illustrating an example mapping relationship between the refined-SSBs and the ROs, according to various arrangements.

FIG. 18 is a diagram illustrating an example transmission of the refined-SSBs, according to various arrangements.

FIG. 19 is a diagram illustrating an example method for Radio Resource Control (RRC) setup, according to various arrangements.

## DETAILED DESCRIPTION

Various example arrangements of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example arrangements and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

The UL only TRP and the forwarding-based network deployments have issues with regards to initial access procedure due to having different UL and DL transmitting and receiving nodes. The arrangements disclosed herein relate to improving the initial access procedure of UL only TRP and the forwarding-based network deployments. The arrangements disclosed herein relate to information transmission during random access procedure.

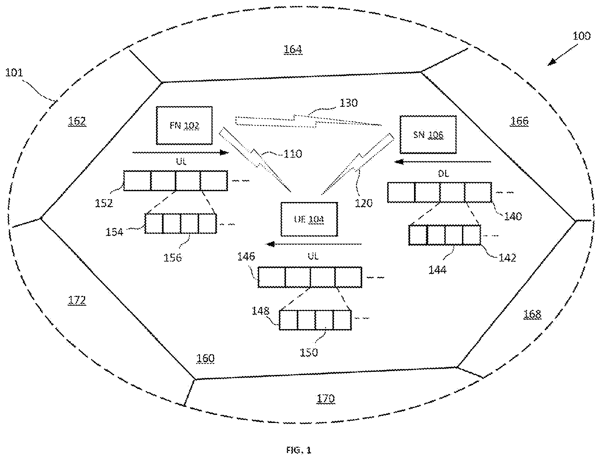

FIG. 1 illustrates an example wireless communication system 100, in accordance with an arrangement of the present disclosure. In the following discussion, the wireless communication system 100 may be any wireless network, such as a cellular network or a narrowband network. The system 100 includes an first node (FN) 102 and a UE 104 that can communicate with each other via a first communication link 110 (e.g., a wireless communication channel). In some arrangements, the first node 102 includes an uplink only node (e.g., UL only TRP, etc.). In some arrangements, the first node 102 includes an uplink and downlink TRP (e.g., TRP, UL and DL TRP, etc.). The system 100 further includes a second node (SN) 106 that can communicate with the UE 104 via a second communication link 120 and that can communicate with the first node 102 via a third communication link 130. In some arrangements, the second node 106 includes a base station. The system 100 further includes a cluster of cells, e.g., at least 160, 162, 164, 166, 168, 170, and 172 overlaying a geographical area 101. In FIG. 1, the first node 102, the UE 104, and the second node 106 are shown to be located within a respective geographic boundary of cell 160. Each of the other cells 162, 164, 166, 168, 170, and 172 may include at least one BS operating at its allocated bandwidth to provide adequate radio coverage to its intended users. For example, the second node 106 may operate at an allocated channel transmission bandwidth to provide adequate coverage to the UE 104. In some arrangements, the first node 102 is TRP that support part of transmission types, for example, only UL reception (e.g., UL only TRP, UL TRP, UL only cell, etc.).

In some embodiments, the second node 106 communicates with the UE 104 via a downlink radio frame 140, the UE 104 communicates with the first node 102 via a first uplink radio frame 146, and the first node 102 communicates with

**EP 4 620 258 B1**

the second node 106 via a second uplink radio frame 152. Each radio frame 140, 146, 152 may be further divided into subframes (or slots) 142, 148, 154 which may include data symbols 144, 150, 156. In the present disclosure, the first node 102, the UE 104, and the second node 106 are described herein as non-limiting examples of communication nodes, generally, which can practice the methods disclosed herein. Such communication nodes may be capable of wireless and/or wired communications, in accordance with various arrangements of the present solution.

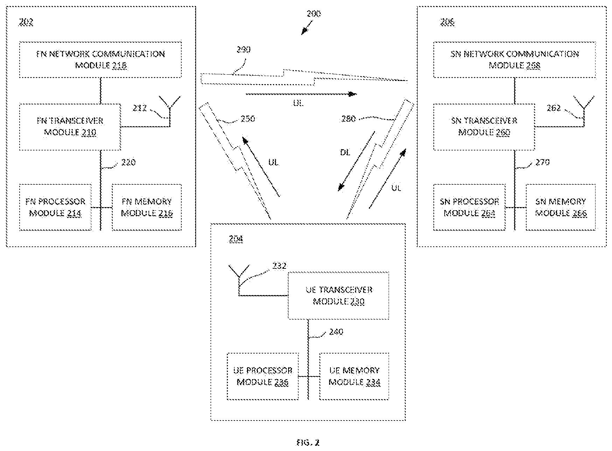

FIG. 2 illustrates a block diagram of an example wireless communication system 200 for transmitting and receiving wireless communication signals, in accordance with some arrangements. The system 200 may include components and elements configured to support known or conventional operating features that need not be described in detail herein. In some arrangements, system 200 can be used to communicate (e.g., transmit and receive) data symbols in a wireless communication environment such as the wireless communication system 100 of FIG. 1, as described above.

The system 200 generally includes a first node (FN) 202, a UE 204, and a second node (SN) 206. In some arrangements, the first node 202 includes an uplink only node (e.g., UL only TRP, etc.). In some arrangements, the first node 202 includes an uplink and downlink TRP (e.g., TRP, UL and DL TRP, etc.). The first node 202 includes a FN transceiver module 210, a FN antenna 212, a FN processor module 214, a FN memory module 216, and a FN network communication module 218, each module being coupled and interconnected with one another as necessary via a FN data communication bus 220. The UE 204 includes a UE transceiver module 230, a UE antenna 232, a UE memory module 234, and a UE processor module 236, each module being coupled and interconnected with one another as necessary via a UE data communication bus 240. The UE 204 communicates with the first node 202 via a first communication channel 250 (e.g., a first wireless transmission link, a first wireless data transmission link, etc.), which can be any wireless channel or other medium suitable for transmission of data as described herein. In some arrangements, the second node 106 includes a base station. The second node 206 includes a SN transceiver module 260, a SN antenna 262, a SN processor module 264, a SN memory module 266, and a SN network communication module 268, each module being coupled and interconnected with one another as necessary via a SN data communication bus 270. The second node 206 communicates with the UE 204 via a second communication channel 280 (e.g., a second wireless transmission link, a second wireless data transmission link, etc.), which can be any wireless channel or other medium suitable for transmission of data as described herein. The first node 202 communicates with the second node 206 via a third communication channel 290 (e.g., a third wireless transmission link, a third wireless data transmission link, etc.), which can be any wireless channel or other medium suitable for transmission of data as described herein.

The system 200 may further include any number of modules other than the modules shown in FIG. 2. The various illustrative blocks, modules, circuits, and processing logic described in connection with the arrangements disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure.

In accordance with some arrangements, the FN transceiver module 210 may be referred to herein as a first uplink transceiver that includes a Radio Frequency (RF) transmitter and a RF receiver each comprising circuitry that is coupled to the FN antenna 212. A duplex switch (not shown) may alternatively couple the uplink transmitter or receiver to the uplink antenna in time duplex fashion. Similarly, the UE transceiver module 230 may be referred to herein as a second uplink transceiver that includes a RF transmitter and a RF receiver each comprising circuitry that is coupled to the UE antenna 232. A duplex switch (not shown) may alternatively couple the uplink transmitter or receiver to the uplink antenna in time duplex fashion. Similarly, in accordance with some arrangements, the SN transceiver module 260 may be referred to herein as a downlink transceiver that includes a RF transmitter and a RF receiver each comprising circuitry that is coupled to the SN antenna 262. A downlink duplex switch may alternatively couple the downlink transmitter or receiver to the downlink antenna in time duplex fashion.

In some embodiments, the operations of two transceiver modules 230 and 260 can be coordinated in time such that the second uplink transceiver is coupled to the UE antenna 232 for reception of transmissions over the second wireless transmission link 280 at the same time that the downlink transmitter is coupled to the SN antenna 262. In some arrangements, there is close time synchronization with a minimal guard time between changes in duplex direction. In some embodiments, the second uplink transceiver is coupled to the UE antenna 232 for reception of transmissions over the second wireless transmission link 280, and the first uplink transceiver is coupled to the FN antenna 212 for reception of transmissions over the first wireless transmission link 250, and at the same time the downlink transmitter is coupled to the SN antenna 262 for transmission of transmissions over the second wireless transmission link 280.

The UE transceiver module 230 and the SN transceiver module 260 are configured to communicate via the second wireless data communication link 280, and cooperate with a suitably configured RF antenna arrangement 232/262 that can support a particular wireless communication protocol and modulation scheme. The UE transceiver module 230

4

and the FN transceiver module 210 are configured to communicate via the first wireless data communication link 250, and cooperate with a suitably configured RF antenna arrangement 232/212 that can support a particular wireless communication protocol and modulation scheme. The UE transceiver module 230 and the SN transceiver module 260 are configured to communicate via the third wireless data communication link 290, and cooperate with a suitably configured RF antenna arrangement 212/262 that can support a particular wireless communication protocol and modulation scheme. In some illustrative arrangements, the FN transceiver module 210, the UE transceiver module 230, and the SN transceiver module 260 are configured to support industry standards such as the Long Term Evolution (LTE) and emerging 5G standards, and the like. It is understood, however, that the present disclosure is not necessarily limited in application to a particular standard and associated protocols. Rather, the FN transceiver module 210, the UE transceiver module 230, and the SN transceiver module 260 may be configured to support alternate, or additional, wireless data communication protocols, including future standards or variations thereof.

In accordance with various arrangements, the first node 202 may be a UL only TRP, for example. In some arrangements, the UE 204 may be embodied in various types of user devices such as a mobile phone, a smart phone, a personal digital assistant (PDA), tablet, laptop computer, wearable computing device, etc. In some arrangements, the second node 206 may be an gNB, evolved node B (eNB), a serving eNB, a target eNB, a femto station, or a pico station, for example. The processor modules 214, 236, and 264 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the arrangements disclosed herein may be embodied directly in hardware, in firmware, in a software module executed by processor modules 214, 236, and 264, respectively, or in any practical combination thereof. The memory modules 216, 234, and 266 may be realized as RAM memory, flash memory, ROM memory, EPROM memory, EEPROM memory, registers, a hard disk, a removable disk, a CD-ROM, or any other form of storage medium known in the art. In this regard, memory modules 216, 234, and 266 may be coupled to the processor modules 214, 236, and 264, respectively, such that the processors modules 214, 236, and 264 can read information from, and write information to, memory modules 216, 234, and 266, respectively. The memory modules 216, 234, and 266 may also be integrated into their respective processor modules 214, 236, and 264. In some arrangements, the memory modules 216, 234, and 266 may each include a cache memory for storing temporary variables or other intermediate information during execution of instructions to be executed by processor modules 214, 236, and 264, respectively. The memory modules 216, 234, and 266 may also each include non-volatile memory for storing instructions to be executed by the processor modules 214, 236, and 264, respectively.

The FN network communication module 218 generally represents the hardware, software, firmware, processing logic, and/or other components of the first node 202 that enable bi-directional communication between the FN transceiver module 210 and other network components and communication nodes configured to communication with the first node 202. For example, the FN network communication module 218 may be configured to support internet or WiMAX traffic. In a typical deployment, without limitation, the FN network communication module 218 provides an 802.3 Ethernet interface such that the FN transceiver module 210 can communicate with a conventional Ethernet based computer network. In this manner, the FN network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

Similarly, the SN network communication module 268 generally represents the hardware, software, firmware, processing logic, and/or other components of the second node 206 that enable bi-directional communication between the SN transceiver module 260 and other network components and communication nodes configured to communication with the second node 206. For example, the SN network communication module 268 may be configured to support internet or WiMAX traffic. In a typical deployment, without limitation, the SN network communication module 268 provides an 802.3 Ethernet interface such that the SN transceiver module 260 can communicate with a conventional Ethernet based computer network. In this manner, the SN network communication module 268 may include a physical interface for connection to the computer network.

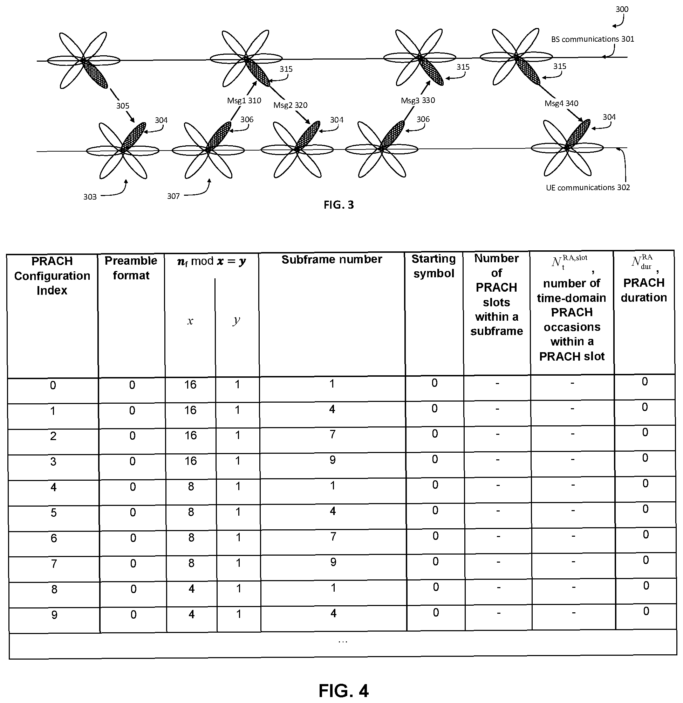

In some examples, FIG. 3 illustrates an example scheme 300 implemented for supporting the initial access (e.g., PRACH procedure) under frequency ranges FR1 (e.g., sub-6G Hz band) and frequency range FR2 (e.g., beyond 6G Hz band). In FIG. 3, the base station communications 301 (e.g., beamforming) of a base station (e.g., the second node 106/206) can be shown on the top rail while UE communications 302 (e.g., beamforming) of a UE (e.g., the UE 104, 204) can be shown on the bottom rail. The transmission of PRACH for example can be transmitted via Msg1 310. The scheme 300 further includes different PRACH formats, PRACH resource configurations, the relationship between the Synchronization Signal/Physical Broadcasting Channel (SS/PBCH) Block (SSB) and PRACH occasion (RO), the mechanism of PRACH retransmission, the mechanism of PRACH power control, and so on.

The shaded beams in FIG. 3 are beams used to transmit or receive data. As shown in FIG. 3, the UE transmits a preamble in RO, according to the configuration of PRACH transmission and a selected SSB. In transmitting the preamble in RO, if the transmit-receive (Tx-Rx) correspondence on the UE-side can be guaranteed, a fixed mapping between the UE's receiving (Rx) beam and the UE's transmitting (Tx) beam can be used. A unique Tx beam can be determined according to its reception of the SSB. For example, the UE can attempt to use different Rx beams 303 to receive the SSB from the base station (e.g., at 305), and determine the best Rx beam 304. In some arrangements, the best Rx beam 304 (e.g., the best downlink Rx beam) is a beam with the highest Reference Signal Received Power (RSRP) or with a RSRP value that is higher than a predefined threshold. According to the best Rx beam 304, the best Tx beam 306 (e.g., best uplink Tx beam) is determined based on beam correspondence. The RO used for transmitting the PRACH is determined according to the relationship between the SSB and RO. Based on the relationship, the base station can determine the SSB selected by the UE. The same beam 315 can be used for transmitting subsequent downlink transmissions, including, Msg2 320 (which can also be referred to as Random Access Response (RAR)) and Msg4 340 (which can be a Physical Downlink Shared Channel (PDSCH) with UE contention resolution identity). According to a RACH procedure, the RAR (e.g., Msg2 320) is communicated after the end of PRACH transmission (e.g., Msg1 310). The UE may monitor RAR Physical Downlink Control Channel (PDCCH) within a RAR window. The RAR window starts at the first symbol of the earliest Control Resource Set (CORESET) for which the UE is configured to receive PDCCH for Typel-PDCCH Common Search Space (CSS) set, that is at least a predefined number of time units (e.g., symbols) after the last symbol of the RO corresponding to the PRACH transmission.

In some arrangements, if the Tx-Rx correspondence on the UE-side cannot be guaranteed, the UE can try different Tx beams for transmitting the PRACH. According to the RACH procedure, the UE may find suitable transmission beam through RACH retransmission/reattempt with variant beams after the failure of the previous RACH transmission, which may be inefficient.

In some arrangements, a first network deployment mode includes a plurality of Transmit-Receive Points (TRPs), which all may be located in the same or different geographical location. Some TRPs may support both downlink transmission and uplink reception. Other TRPs may support only part of transmission types, for example, only uplink reception (e.g., UL only TRP, UL TRP, UL only cell, etc.). In the first network deployment mode, UL only TRP can be used to expand the uplink coverage and the uplink capacity. In some arrangements, a second network deployment mode includes a forwarding-based network, where special relay nodes (e.g., Relay, Integrated Access Backhaul (IAB), Network Controlled Repeater (RN), etc.) are deployed to amplify and forward the received signals between the BS and the UE, thereby expanding the UL and DL coverage area of the BS.

The first and second network deployment modes may face issues relating to performing PRACH transmission when the UL and DL transmit and receive nodes are different (e.g., the SSB is transmitted by the BS and the PRACH is received by the UL, etc.), such as transmission resource configuration, transmission timing, transmission power determining, how the relay node forwards the initial access-related signal channel (e.g., PBCH Block SSB, PRACH, etc.).

FIG. 4 is a table illustrating an example mapping relationship between PRACH Configuration Index, preamble formats, SFN, subframe number, starting symbol, number of PRACH slots within a subframe, number of time-domain ROs within a PRACH slot, and PRACH duration, according to various arrangements. In some arrangements, the SFN in which the PRACH resource is located can be calculated using the formula nf mod x=y, where x corresponds to a period of PRACH resource (in terms of system frame or milliseconds) and y corresponds to a frame the PRACH resource is located within for each period. In some arrangements, the table illustrated in FIG. 4 is a table of random access configurations. The time domain resource of RACH transmission is configured via Radio Resource Control (RRC) signaling PRACH Configuration Index. The PRACH Configuration Index will map to a line in the table illustrated in FIG. 4 to determine one or more of the preamble formats, the frame number, the subframe number, the starting symbol, the number of PRACH slots within the subframe, the number of time-domain ROs within the PRACH slot, and the PRACH duration. In some arrangements, the table illustrated in FIG. 4 includes 256 rows (e.g., lines). In some arrangements, the value of the PRACH Configuration Index will be between approximately 0 and approximately 255.

In some arrangements, a frequency domain resource of the PRACH transmission is configured via the RRC signaling, where msg1-FrequencyStart provides a frequency starting RB within the carrier or bandwidth part and msg1-Frequency Division Multiplexing (FDM) provides how many RACH transmission resource are FDMed. For example, the frequency domain resource of the RACH transmission may be configured via the following RRC signaling:

      msg1-FDM                            ENUMERATED {one, two, four, eight},

| msg1-FrequencyStart | INTEGER (0..maxNrofPhysicalResourceBlocks-1), |
|---|---|

In some arrangements, the RO can be determined based on the time and frequency domain resource configuration.

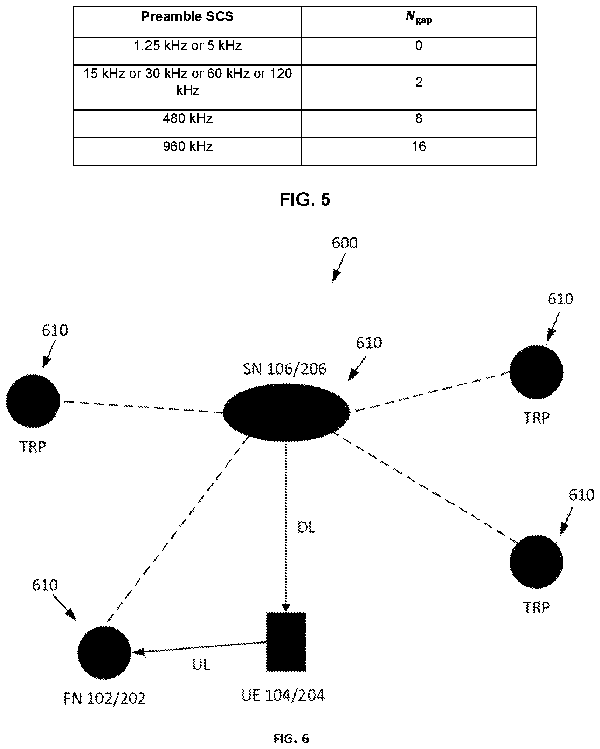

FIG. 5 is a table illustrating an example mapping relationship between preamble subcarrier spacing (SCS) and $N_{gap}$ symbols (e.g., number of PRACH slots within a subframe), according to various arrangements. In some arrangements, the $N_{gap}$ symbols can be determined based on the preamble SCS. For example, based on FIG. 5, a subframe that includes a duration of 1 millisecond (ms) for a 30 kHz SCS (which includes PRACH slots with durations equal to 0.5 ms) corresponds to an $N_{gap}$ symbol of 2. In some arrangements, the validity of the RO can be verified. For example, if a UE is provided (e.g., *tdd-UL-DL-ConfigurationCommon*), the RO in the PRACH slot can be verified as valid if (i) the RO is within the UL symbols, or (ii) (a) the RO does not precede a SS/PBCH block in the PRACH slot, (b) the RO starts at least $N_{gap}$ symbols after a last downlink symbol, and (c) the RO starts at least $N_{gap}$ symbols after a last SS/PBCH block symbol. In some arrangements, the preamble formats illustrated in FIG. 4 correspond to $N_{gap}$ symbols, For example, a B4 preamble format may correspond to an $N_{gap}$ symbol of 0.

FIG. 6 is a diagram illustrating an example wireless communication system 600 including UL only TRP, in accordance with some arrangements. The wireless communication system 600 includes a plurality of TRPs 610. In some arrangements, each TRP 610 is located in a different geographical location. In some arrangements, one TRP (e.g., the second node 106/206) of the plurality of TRPs 610 supports both downlink transmission and uplink reception, while the remaining four TRPs 610 (e.g., first node 102/202, UL only TRPs, UL TRPs, etc.) support part of transmission types, for example, uplink reception. During the initial access procedure, the UE 104/204 will detect SSB for DL synchronization and system information acquisition transmitted by the second node 106/206. After detection of the SSB, the UE 104/204 will initiate the RACH procedure for this SSB. As illustrated in FIG. 6, the downlink transmission node (e.g., the second node 106/206) may be different from the uplink receiving node (e.g., first node 102/202), resulting in the downlink measurement being inapplicable for usage as a reference for the uplink transmission, such as determining beam information, timing information, power information, and so on.

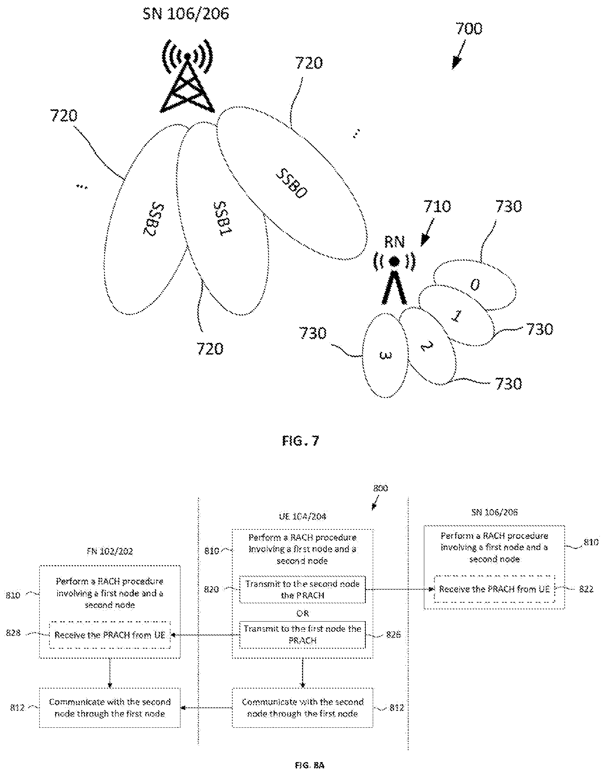

FIG. 7 is a diagram illustrating an example wireless communication system 700 including a forwarding-based network, in accordance with some arrangements. The wireless communication system 700 includes one or more relay nodes (RNs) 710 (e.g., Relay, IAB (Integrated Access Backhaul), NCR (Network Controlled Repeater), etc.) that are configured to amplify and forward received signals between the second node 106/206 and the UE 104/204, thereby expanding bother the uplink and downlink coverage area of the SB 106/206. The wireless communication system 700 further includes one or more backhaul links 720 between the second node 106/206 and the RN 710 and one or more access links 730 between the RN 710 and the UE 104/204. In some arrangements, each of the one or more backhaul links 720 are associated with a particular SSB (e.g., SSB0, SSB1, SSB2, etc.), such that the RN 710 receives the particular SSB of a corresponding backhaul link 720 (e.g., SSB0), and each of the one or more access links 730 is associated with a particular refined SSB (e.g., refined-SSB#0, refined-SSB#1, refined-SSB#2, etc.). The arrangements discloses herein provide a method for forwarding the SSB (e.g., the particular refined SSB) to the UE 104/204, forwarding subsequent uplink transmission from the UE 104/204 (e.g., PRACH), and defining action for when forwarding nodes accept initial access of a subordinate UE (e.g., UE 104/204).

In some arrangements, an uplink coverage area of the UE 104/204 may correspond to the first node 102/202 or the second node 106/206, such that the uplink transmission of the UE 104/204 may be transmitted to the second node 106/206 directly or forwarded to the second node 106/206 via the first node 102/202. Different uplink receiving nodes can affect a subsequent initial access process of the UE 104/204 (different initial access processes are referred to as different RACH modes for UE 104/204). The UE 104/204 selects from at least two RACH modes that includes a first RACH mode and a second RACH mode. The determination of the RACH mode by the UE 104/204 can also be considered as determination of the transmission link for PRACH transmission, e.g., the PRACH is transmitted to the first node 102/202 (corresponding to the first RACH mode) or the second node 106/206 (corresponding to the second RACH mode). In other words, the determination of the RACH mode by the UE 104/204 is related with how the UE 104/204 determines the receiving node for the uplink transmission.

In some arrangements, before initiating the random access process or during the random access process, the UE 104/204 determines or selects the RACH mode by utilizing a particular mechanism. In some examples, the mechanism for selecting the RACH mode includes defining a measurement threshold (e.g., RSRP threshold, etc.). For example, the UE 104/204 performs the measurement and compares the measurement result with the measurement threshold. In some arrangements, the transmission includes at least one of a reference signal, data, or the like. In some arrangements, the measurement includes at least one of RSRP, SS-RSRP, Received Signal Strength Indication (RSSI), Signal-to-Noise-plus-Interference Ratio (SINR), (Channel Quality Indicator (CQI), or the like. In some examples, the measurement includes SS-RSRP measurement. In response to determining that the measurement result is lower than or no higher than the measurement threshold, the UE 104/204 selects the first RACH mode (e.g., selecting the first node 102/202 as the uplink receiving node (the uplink receiving node is not the node which transmits the SSB)). In response to determining that the measurement result is no lower than or higher than the measurement threshold, the UE 104/204 selects the second RACH mode (e.g., selecting the second node 106/206 as the uplink receiving node (the uplink receiving node is the node which transmits the SSB)).

**In** some examples, the mechanism for selecting the RACH mode includes defining a measurement threshold range (e.g., RSRP value range including two RSRP values (a minimum RSRP value and a maximum RSRP value)). For example, the UE 104/204 performs the measurement and compares the measurement result and the measurement threshold range. In response to determining that the measurement result is within the measurement threshold range, the UE 104/204 selects the first RACH mode (e.g., selecting the first node 102/202 as the uplink receiving node). In response to determining that the measurement result is out of the measurement threshold range, the UE 104/204 selects the second RACH mode (e.g., selecting the second node 106/206 as the uplink receiving node).

**In** some examples, the mechanism for selecting the RACH mode includes the UE 104/204 performing random access using a default RACH mode (e.g., one of the first RACH mode and the second RACH mode), and when the number of times that the RACH fails reaches a certain threshold (e.g., number of failed attempts), the UE 104/204 switches to a non-default RACH mode (e.g., other one of the first RACH mode and the second RACH mode) to continue the random access procedure. For example, selecting the first RACH mode or the second RACH mode includes selecting one of the first RACH mode or the second RACH mode in response to failing the RACH procedure for a number of attempts using another one of the first RACH mode or the second RACH mode, where the number of attempts is equal to or greater than a threshold.

In some examples, the mechanism for selecting the RACH mode includes the UE 104/204 performing random access using the default RACH mode, and when the preamble transmission power reaches a maximum value but still fails, the UE 104/204 switches to the non-default RACH mode to continue the random access procedure. For example, selecting the first RACH mode or the second RACH mode includes selecting one of the first RACH mode or the second RACH mode in response to a power of a preamble transmission in another one of the first RACH mode or the second RACH mode reaching a predefined value and still failing. In some arrangements, the predefined value includes a maximum transmission power of the preamble transmission configured by the second node. In some arrangements, the power of the preamble transmission increases after each failed attempt.

The mechanisms for selecting the RACH mode may be SSB specific, such that for different SSBs whether RACH mode selection need to be performed can be independently configured, and parameter value in a RACH mode selection mechanism may be different for different SSBs. In some arrangements, for each SSB, the second node 106/206 may configure whether a plurality of RACH modes exist when the SSB is selected for random access (e.g., whether RACH mode selection needs to be performed for this SSB). In some examples, when there is only one RACH mode for an SSB, the only one RACH mode can be indicated. In some examples, when there is no RACH mode indicated, the default RACH mode is applied. In some arrangements, there are multiple RACH modes for the SSB, and the configuration information further includes the parameter value required for RACH mode selection for the SSB. As described above, different RACH modes are defined and some rules for RACH mode determination or selection are also defined. The UE 104/204 can effectively select a proper RACH mode for the random access procedure.

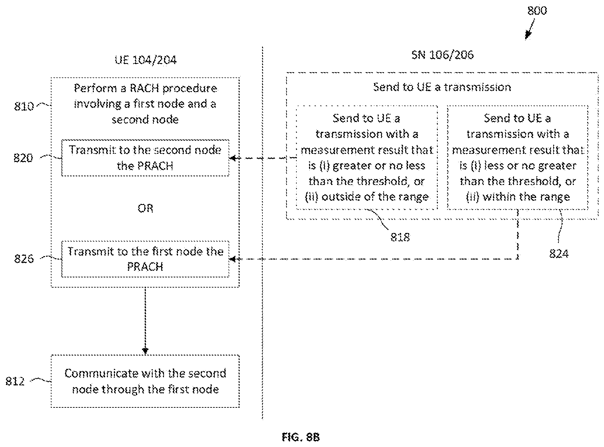

FIGS. 8A and 8B are flowchart diagrams illustrating an example method 800 for performing a RACH procedure involving multiple nodes, according to various arrangements. The method can be performed by the first node 102/202, the UE 104/204, and the second node 106/206, according to various arrangements.

As shown in FIG. 8A, at 810, the UE 104/204 performs a RACH procedure involving a first node (e.g., the first node 102/202) and a second node (e.g., the second node 106/206), where the UE 104/204 receives downlink data from the second node. At 812, the UE 104/204 communicates with the second node 106/206 through the first node 102/202. In some arrangements, the UE 104/204 receives the DL transmission from the second node 106/206 and transmits the UL transmission through the first node 102/202. The UE 104/204 selects a first RACH mode or a second RACH mode. In some arrangements, the first RACH mode or the second RACH mode is selected for a SSB, each beam, or a Channel State Information - Reference Signal (CSI-RS). In some examples, the UE 104/204 selects at least one of the SSB, the beam, or the CSI-RS and determines the RACH mode based on the selected at least one of the SSB, the beam, or the CSI-RS.

At 820, in the second RACH mode, the UE 104/204 transmits a PRACH to the second node 106/206. At 822, the second node 106/206 receives the PRACH from the UE 104/204. At 826, in the first RACH mode, the UE 104/204 transmits the PRACH to the first node 102/202. At 828, the first node 102/202 receives the PRACH from the UE 104/204.

In some arrangements, as shown in FIG. 8B, at 818, the second node 106/206 sends a transmission to the UE 104/204. In some examples, the UE 104/204 selects the second RACH mode in response to determining that a measurement result of the transmission from the second node 106/206 is (i) greater or no less than a threshold, or (ii) outside of a range. In some arrangements, at least one of "greater than" or "less than" does not include equal to. In some arrangements, at least one of "greater than" or "less than" does include equal to (e.g., equal to or greater than, equal to or less than, etc.). In some arrangements, at 824, the second node 106/206 sends a transmission to the UE 104/204. In some examples, the UE 104/204 selects the first RACH mode in response to determining that the measurement result of the transmission from the second node 106/206 is (i) less or no greater than the threshold, or (ii) within the range.

In some arrangements, a wireless communication apparatus includes at least one processor and a memory, where the at least one processor is configured to read code from the memory and implement the method 800. In some arrangements, a computer program product including a computer-readable program medium code stored thereupon, where the code, when executed by at least one processor, causes the at least one processor to implement the method 800.

The UE 104/204 selects a first transmission link for the RACH procedure or a second transmission link for the PRACH transmission, where the first transmission link is between the wireless communication device and the first node and the second transmission link is between the wireless communication device and the second node.

In some arrangements, the UE 104/204 determines an DL cell by detecting SSBs. For example, the UE 104/204 selects an SSB whose SS-RSRP is higher than a predefined threshold (an RSRP threshold configured by the second node 106/206) and a synchronization signal (including a primary synchronization signal (PSS) and a secondary synchronization signal (SSS)) in the SSB carries cell id information. The UE 104/204 uses the beam for receiving the SSBs as the reception beam for subsequent downlink reception in the RACH procedure.

In some arrangements, the UE 104/204 sends the preamble (e.g., Msg.1) on a group of ROs using different transmission beams. Due to the uplink and downlink of the UE 104/204 being asymmetrical (the downlink transmission is received from the second node (e.g., the second node 106/206, gNB, etc.) and the uplink is transmitted to the first node (e.g., first node 102/202, UL only TRP, etc.)), the beam used for the uplink transmission cannot be determined based on the downlink reception. In some examples, the beam used for the uplink transmission is based on performing a training of receiving beam for first node 102/202 and transmission beam of the UE 104/204. For example, different Rx/Tx beam pairs can be attempted for receiving and transmitting the PRACHs to determine an optimal or acceptable Rx/Tx beam pair for subsequent UL transmission (e.g., Msg.3 PUSCH). In some examples, the UE 104/204 selects a reception/transmission (Rx/Tx) beam pair by attempting a plurality of reception/transmission beam pairs, where the reception/transmission beam pair is used for sending uplink transmission from the UE 104/204 to the first node.

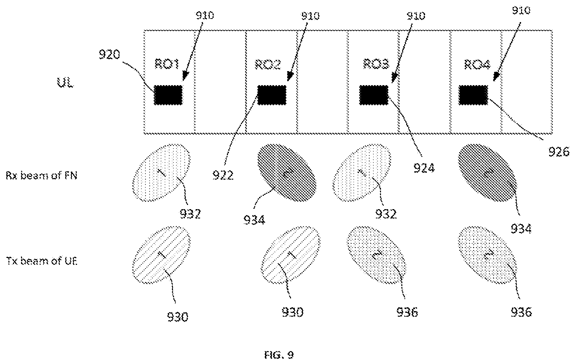

FIG. 9 is a diagram illustrating an example combination of transmission (Tx) and reception (Rx) to identify the best or acceptable Tx/Rx beam pair, in accordance with some arrangements. As shown in FIG. 9, a plurality of ROs 910 (e.g., four ROs) are associated with the same SSB. In this example illustrated in FIG. 9, when the UE 104/204 selects the SSB to initiate a random access process, there are M (e.g., M =2) Tx beams at the UE side, and there are N (e.g., N =2) Rx beams at the UL only TRP side. When the UE 104/204 initiates initial access to the UL only TRP, the UE 104/204 does not know which Tx beam is used to enable the network side to receive data effectively, nor does the first node 102/202 know which Rx beam is used to receive data effectively. In some arrangements, within the at least M*N (i.e., 4) ROs 910, the preambles are transmitted/received through different combinations of Tx and Rx beams to identify the best or acceptable Tx/Rx beam pair. For example, the UE 104/204 transmits to the network a preamble using a transmission beam of each of the plurality of reception/transmission beam pairs, where each of the plurality of reception/transmission beam pairs comprises one of a plurality of reception beams (e.g., N) and one of a plurality of transmission beams (e.g., M). The transmission beam is one of the plurality of transmission beams. The network receives the preamble using a reception beam of each of the plurality of reception/transmission beam pairs, where the reception beam is one of the plurality of reception beams.

In some examples, the Tx/Rx switching rule between different ROs can be predefined. For example, the UE 104/204 may utilize the first Tx beam to transmit the preamble for a predefined number of times, switch the Tx beam to a second one to transmit the preamble for the predefined number of times, and so on until all Tx beams are traversed. In some examples, for preamble transmissions of each predefined number, the first node 102/202 can switch its Rx beams. In some arrangements, the predefined number is larger than or equal to the number of Rx beams of the first node 102/202. In some arrangements, the ROs 910 used in the preamble transmission in one RACH attempt can be defined as an RO group. For example, the preamble is transmitted in a group of ROs using the plurality of reception/transmission beam pairs, where each RO in the group of ROs corresponds to each of the plurality of reception/transmission beam pairs. In some arrangements, the ROs 910 used for transmitting preamble with same transmission beam within one RACH attempt can be defined as an RO group, and M RO groups will be used during one RACH attempt. For example, the preamble is transmitted in a plurality of groups of ROs using the plurality of reception/transmission beam pairs, where each of the plurality of groups of ROs corresponds to a transmission beam of the plurality of transmission beams.

In some arrangements, the plurality of ROs 910 includes a first RO 920 (e.g., RO1), a second RO 922 (e.g., RO2), a third RO 924 (e.g., RO3), and a fourth RO 926 (e.g., RO4). As shown in FIG. 9, in the first RO 920, the UE 104/204 sends data using a Tx beam1 930 and the first node 102/202 receives the data using a Rx beam1 932. In the second RO 922, the UE 104/204 sends data using the Tx beam1 930 and the first node 102/202 receives the data using a Rx beam2 934. In the third RO 924, the UE 104/204 sends data using a Tx beam2 936 and the first node 102/202 receives the data using the Rx beam1 932. In the fourth RO 926, the UE 104/204 sends data using the Tx beam2 936 and the first node 102/202 receives the data using the Rx beam2 934. The first node 102/202 may identify, by receiving the plurality of ROs 910 (e.g., the first RO 920, the second RO 922, the third RO 924, and the fourth RO 926), which Rx beam has the best receiving quality. For example, the first node 102/202 may identify the fourth RO 926 has the best receiving quality, which determines that the Tx/Rx beam pair (the Tx beam2 936 and the Rx beam2 934) used in the fourth RO 926 is the best Tx/Rx beam pair. In response to determining that the fourth RO 926 has the best receiving quality, the first node 102/202 (i) determines that the Rx beam2 934 is the best Rx beam for receiving uplink transmission from the UE 104/204, and (ii) utilizes the Rx beam2 934 for receiving the subsequent uplink transmission from the UE 104/204. In some arrangements, in response to determining that the fourth RO 926 has the best receiving quality, the first node 102/202 also determines that the Tx beam2 936 is the best Tx beam, but this is unknown to the UE 104/204. In some examples, the second node 106/206 will indicate to the UE 104/204 that the Tx beam2 936 is the best Tx beam is subsequent steps such that the optimal Tx beam (e.g., the Tx beam2 936) can be used for subsequent uplink transmission (e.g., Msg.3).

In some arrangements, the first node 102/202 receives the preamble, the second node 106/206 can determine the Tx beam to send RARs according to the association between the RO and the SSB. In some examples, the second node 106/206 will use Tx beam of the SSB to transmit the RAR, where the SSB is associated with the RO that is identified by the first node 102/202 during the process of preamble reception. In some arrangements, the best or suitable Tx beam for uplink transmission can be indicated in the RAR. In some arrangements, some information related with Timing Advance (TA) determination for subsequent uplink transmission is transmitted within the RAR. In some arrangements, some information related with and power control for subsequent uplink transmission (e.g., Msg.3 PUSCH) is transmitted within the RAR. In some arrangements, the UE 104/204 transmits the Msg.3 PUSCH by using the indicated Tx beam.

In some arrangements, the UE 104/204 is indicated the best or suitable Tx beam for uplink transmission after receiving RAR. In some examples, the uplink transmission after receiving RAR can be Msg.3 PUSCH and other uplink transmissions. For each RO used for transmitting the preamble, the used Tx beam is known for the UE 104/204 who transmits the preamble. In some examples, the indication information can be a RO index within a RO group, and the indication information can be included in the RAR. In some arrangements, the ROs used in the preamble transmission in one RACH attempt can be defined as an RO group. In some arrangements, the ROs used for transmitting preamble with same beam within one RACH attempt can be defined as an RO group, and M RO groups will be used during one RACH attempt. In some examples, the UE 104/204 receives from the second node a RAR that indicates a transmission beam using which the UE 104/204 transmits an uplink transmission, where the RAR indicates the transmission beam using an RO index within an RO group.

In some arrangements, RAR is carried on a PDSCH which is scheduled by a Downlink Control Information (DCI) format with Cyclic Redundancy Check (CRC) scrambled by a parameter (e.g., Random Access Radio Network Temporary Identifier (RA_RNTI)). The RA_RNTI can be calculated according to the time domain location of the RO group. For example, the time domain position of the last RO or the first RO within a RO group can be used for calculating the RA_RNTI. In some examples, the RAR is carried on a downlink channel (e.g., PDSCH) scheduled by the DCI format having a CRC scrambled by a parameter (e.g., RA_RNTI), where the parameter is determined according to a time-domain location of at least one RO (e.g., a first RO, a last RO, etc.) in the RO group.

In some arrangements, if there are N ROs (N is a positive integer) in one RO group, $\left\lceil \log_2^N \right\rceil$ bits is utilized for indicated RO index within one RO group. In some examples, the $\left\lceil \log_2^N \right\rceil$ bits can be included in RAR. In some arrangements, the RO group includes a number Q of ROs, and a number of bits in the RAR used to indicate the RO index within the RO group can be determined using $|\log_2 Q|$, where Q is a positive integer. In some examples, Q may be greater than or equal to N.

In some other arrangements, if there are N ROs in one RO group, $\log_2^N$ bits is utilized for indicated RO index within one RO group, where N is a positive integer and is equal to a value of 2. In some examples, the $\log_2^N$ bits can be included in RAR. In some arrangements, the RO group includes a number Q of ROs, and a number of bits in the RAR used to indicate the RO index can be determined using $\log_2 Q$, where Q is a positive integer and is equal to a value of 2 (e.g., is a power of 2). In some examples, Q may be greater than or equal to N.

In some arrangements, in response to receiving the RAR, the UE 104/204 determines the RO group according to the RA_RNTI and the RO index within the RO group according to the indication information in the RAR. In some examples, in response to receiving the RAR, the UE 104/204 further determines that the Tx beam used for transmitting preamble in the RO is the best or suitable Tx beam for uplink transmission (e.g., Msg.3 PUSCH).

In some arrangements, the UE 104/204 determines the transmission timing for uplink transmission after receiving RAR. In some examples, the UE 104/204 receives from the second node a RAR and determines a transmission time for an uplink transmission transmitted by the UE 104/204 after receiving the RAR. In some arrangements, an uplink transmission TA determining mechanism for the uplink transmission after receiving RAR (e.g., when the downlink transmitting node is the same as the uplink receiving node, for example, both of them are BSs) includes the receiving timing being considered as the transmitting timing for sending the preamble. After receiving the preamble, the second node 106/206 may use the offset between the receiving timing and the BS frame boundary as a component of the TA, and notify it to the UE 104/204 in the RAR. In some arrangements, the TA can be determined as a sum of a transmission time between the second node 106/206 and the UE 104/204 and a transmission time between the UE 104/204 and the first node 102/202. In some examples, a TA offset (TA_offset) is configured in the System Information Block1 (SIB1) as another component of the TA. The TA_offset may be utilized to reserve enough time for switching from Rx to Tx on the BS side. In some examples, a process time of the first node 102/202 for forwarding the information received from UE 104/204 to the second node 106/206 is another component of the TA.

In some examples, the UE 104/204 determines a TA for the uplink transmission relative to a downlink receiving timing at which the RAR is received and (i) in response to selecting the first RACH mode, a value of a timing advance offset provided in the SIB is omitted for determining the TA, where the first RACH mode includes the UE 104/204 transmitting the PRACH to the first node, and (ii) in response to selecting a second RACH mode, the value of the TA _offset provided in the SIB is used for determining the TA, where the second RACH mode includes the UE 104/204 transmitting the PRACH to the second node.

In some arrangements, in deployment of forwarding the uplink transmission to the second node 106/206 by using the first node 102/202, because the first node 102/202 does not need a Rx/Tx switching time, when the UE 104/204 determines that current uplink receive node is an first node 102/202, the TA_offset configured in the SIB1 is not included in the TA. In some examples, other factors, such as, the transmission delay between the first node 102/202 and the second node 106/206,timing difference between reception timing of the first node 102/202 and the BS frame boundary, and process time of the first node 102/202 for forwarding the information received from UE 104/204 to the second node 106/206, are considered. In some arrangements, the uplink transmission after receiving RAR can be Msg.3 PUSCH and other uplink transmissions.

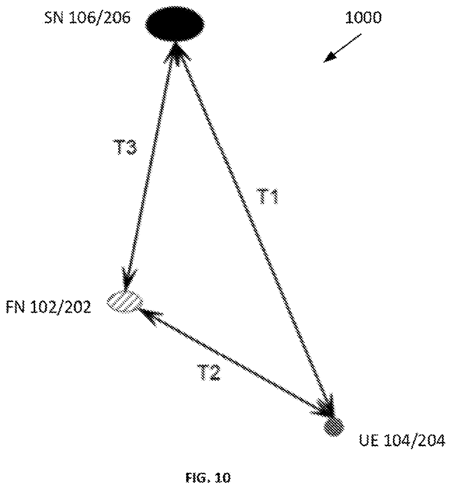

FIG. 10 is a diagram 1000 illustrating an example cellular communication network including transmission delays, in accordance with some arrangements. A first transmission delay T1 is defined as a transmission delay between the second node 106/206 and the UE 104/204, a second transmission delay T2 is defined as a transmission delay between the first node 102/202 and the UE 104/204, and a third transmission delay T3 is defined as a transmission delay between the first node 102/202 and the second node 106/206.

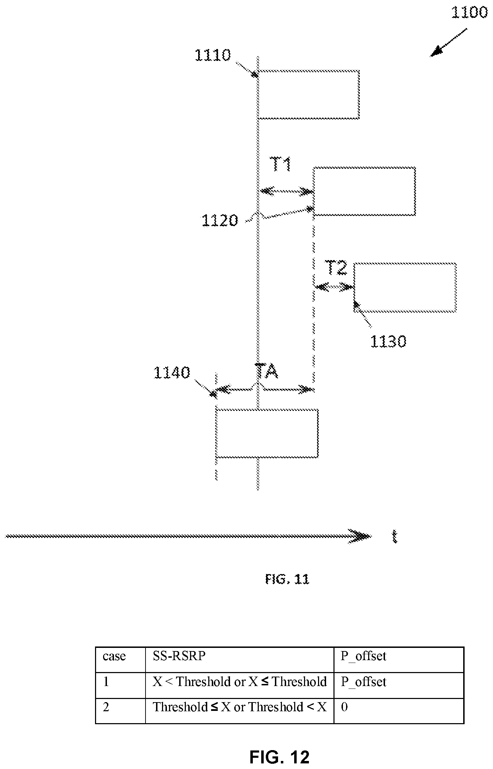

FIG. 11 is a diagram 1100 illustrating an example timeline of reception and transmission timings, in accordance with some arrangements. At 1110, a time point represents BS frame boundary or transmission timing of the second node 106/206 or downlink transmission timing of the second node 106/206. The downlink transmission reaches UE 104/204 after a delay of T1. At 1120, a time point B represents the downlink transmission reception timing by the UE 104/204. For the PRACH transmission, the UE 104/204 utilizes the reception timing as the transmission timing to transmit the preamble to the first node 102/202. At 1130, a time point C represents the PRACH reception timing by the first node 102/202. In some examples, the BS frame boundary is known to the first node 102/202. In some examples, the first node 102/202 may learn of, based on receiving the preamble, a sum of the transmission time between the second node 106/206 and the UE 104/204 (the first transmission delay T1) and the transmission time between the UE 104/204 and the first node 102/202 (the second transmission delay T2), and forward the related information to the second node 106/206. In some arrangements, the second node 106/206 may configure a TA for the UE 104/204 by using RARs. In some examples, the TA for the UE 104/204 includes an amount of time that needs to be advanced in subsequent uplink transmission relative to the receiving timing. In some examples, the TA for the UE 104/204 enables the uplink transmission to arrive at the network side at a specified time. At 1140, a time point D represents the transmit uplink transmission by the UE 104/204.

In some arrangements, there is an ideal backhaul between the second node 106/206 and the first node 102/202, and there is no transmission delay between them (e.g., the third transmission delay T3 = 0). In some examples, the reception timing of the first node 102/202 is aligned with BS frame boundary. In some arrangements, where the RAR includes the TA for the uplink transmission relative to a timing by which the downlink transmission is received, the TA can be determined as a sum of a transmission time between the second node 106/206 and the UE 104/204 (e.g., the first transmission delay T1) and a transmission time between the UE 104/204 and the first node 102/202 (e.g., the second transmission delay T2). For example, the TA value for the UE 104/204 can be calculated by the following formula: TA = T1 + T2.

In some arrangements, an initial transmission delay T0 is related to at least one of the third transmission delay T3 or a timing difference T4 between reception timing of the first node 102/202 and BS frame boundary or a process time of the first node T5. For example, the TA value for the UE 104/204 can be calculated by the following formula: TA = T1+T2+T0. In some arrangements, where the RAR includes the TA for the uplink transmission relative to a time by which the RAR is received, the TA can be determined as a sum of a transmission time between the second node and the UE 104/204 (e.g., the first transmission delay T1), a transmission time between the UE 104/204 and the first node (e.g., the first transmission delay T2), and an offset (e.g., T0) In some arrangements, the offset is at least one of (i) a transmission delay between the second node and the first node (e.g., the third transmission delay T3), (ii) a timing difference between a reception timing of the first node and a frame boundary of the first node (e.g., T4), or (iii) a processing time of the first node (e.g., T5).

In some examples, there is an ideal backhaul between the second node 106/206 and the first node 102/202 such that there is no transmission delay between the first node 102/202 and the second node 106/206 (e.g., the third transmission delay T3 = 0). In some examples, the third transmission delay T3 ≠ 0. In some examples, the fourth transmission delay T4 can be a positive value, a negative value, or a zero. When T4 = 0, it indicates that the reception timing of the first node 102/202 is aligned with BS frame boundary. When T4 is a positive value, it indicates that the BS frame boundary is $|T4|$ behind of the reception timing of the first node 102/202. When T4 is a negative value, it indicates that the BS frame boundary is $|T4|$ ahead of the reception timing of the first node 102/202.

**In** some arrangements, the UE 104/204 determines the transmission power for preamble transmission. In some arrangements, according to transmission power determination mechanism for PRACH transmission, downlink path loss (PL) can be obtained according to measurement of downlink reference signal (e.g., SSB) and it can be used for calculating the PRACH transmission power. In some examples, the PRACH transmission power equals to a sum of a target reception power and the downlink PL. In some arrangements, in deployment of forwarding the uplink transmission to the second node 106/206 by using the first node 102/202, downlink PL and uplink PL may be different, which prevents usage of the downlink PL for determining uplink transmission power directly.

In some arrangements, one or more of a path loss adjustment amount or a transmit power adjustment amount (P_offset) can be configured via system information (e.g., SIB1). In some arrangements, the UE 104/204 receives from the second node a power offset (e.g., P_offset) in a SIB. In some examples, the PRACH transmission power can be determined as the sum of the target reception power, the downlink PL, and the P_offset. In some examples, the P_offset is determined based on the measurement threshold (e.g., RSRP threshold). As described previously, the RSRP threshold is defined for uplink access node determination or selection.

FIG. 12 is a table illustrating an example mapping relationship between Synchronization Signal Reference Signal Received Power (SS-RSRP) measurement result and the P_offset, according to various arrangements. As shown in FIG. 12, in some arrangements, if the measurement result is lower than or no greater than the measurement threshold, the first node 102/202 is determined or selected as uplink receiving node and the P_offset will be used for calculating the transmission power for the preamble. As shown in FIG. 12, in some arrangements, if the measurement result is no less than or greater than the measurement threshold, the second node 106/206 is determined or selected as uplink receiving node and the P_offset will not be used for calculating the transmission power for the preamble (e.g., P_offset = 0).

**In** some arrangements, other mechanisms can be used for determining uplink receiving node or RACH mode for the UE 104/204. In some arrangements, if the uplink receiving node is the first node 102/202, the P_offset will be used for calculating the preamble transmission power, and if the uplink receiving node is the second node 106/206 which is not the transmission node of the SSB, the P_offset will not be used for calculating the preamble transmission power (e.g., P_offset = 0). For example, in response to the UE 104/204 sending the preamble to the first node using the transmission power, the UE 104/204 determines the transmission power using the power offset (e.g., P_offset), and in response to the UE 104/204 sending the preamble to the second node using the transmission power, the UE 104/204 determines the transmission power without using the power offset (e.g., P_offset = 0).

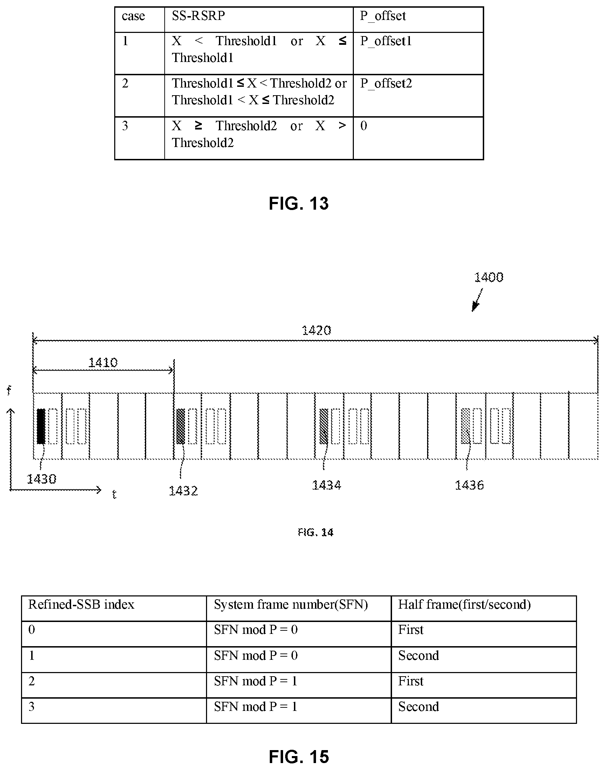

FIG. 13 is a table illustrating another example mapping relationship between SS-RSRP and P_offset, according to various arrangements. In some arrangements, more than one P_offset is configured. In some examples, as shown in FIG. 13, (i) if the measurement result is lower than or no higher than a measurement threshold1, a P_offset1 will be used for calculating the transmission power for the preamble, (ii) if the measurement result is (a) lower than or no higher than a measurement threshold2 and (b) no lower than or higher than the measurement threshold1, a P_offset2 will be used for calculating the transmission power for the preamble, and (iii) if the measurement result is no lower than or higher than the measurement threshold2, the P_offset will not be used for calculating the transmission power for the preamble (e.g., P_offset = 0).

In some arrangements, the UE 104/204 determines the transmission power for Msg.3 PUSCH transmission. In some arrangements, according to transmission power determination mechanism for Msg.3 transmission, a first list of delta values (e.g., {-1, ..., 6}) are defined and an RRC parameter is used for indicating one delta from the list (e.g., Delta1), where the power of Msg.3 transmission is determined as the sum of the transmission power of the preamble and Delta1. In some arrangements, there may be larger power difference between the preamble and the Msg.3. In some arrangements, a second list (e.g., new list, etc.) of delta values with larger granularity can be defined (e.g., {-20, -10, 0, 10, 20, 30}) and an indication may be used for indicating one delta from the new list (e.g., Delta2), where if the UE 104/204 determines that the uplink receiving node is the first node 102/202, the delta value from the second list may be used for determining the power of Msg.3 transmission.

In some arrangements, the UE 104/204 receives from the second node the first list of delta values and the second list of delta values and determines a transmission power for transmitting Msg.3 uplink (e.g., PUSCH) transmission according to one of the first list of delta values and the second list of delta values. In some examples, determining the transmission power for transmitting the Msg.3 uplink transmission according to one of the first list of delta values and the second list of delta values is based on which RACH mode (e.g., the first RACH mode and the second RACH mode) the UE 104/204 selected.

In some arrangements, the UE 104/204 receives an indication from the second node. In response to selecting the first RACH mode, a delta value from the first list of delta values is determined according to the indication, where the first RACH mode includes the UE 104/204 transmitting the PRACH to the first node. In response to selecting the second RACH mode, a delta value from the second list of delta values is determined according to the indication, where the second RACH mode includes the UE 104/204 transmitting the PRACH to the second node. The UE 104/204 determines the transmission power using the delta value and transmits to the first node the Msg.3 uplink transmission using the transmission power.

In some arrangements, the Delta2 will be indicated via RAR or SIB1 and will be used for calculating the transmission power of the Msg.3 instead of the Delta1, such that the power of Msg.3 transmission is determined as the sum of the transmission power of the preamble and the Delta2.

In some arrangements, the Delta2 will be indicated via RAR or SIB1 and will be used for calculating the transmission power of the Msg.3 together with the Delta1, such that the power of Msg.3 transmission is determined as the sum of the transmission power of the preamble, the Delta1, and the Delta2.

In some arrangements, if a UE 104/204 determines that the uplink receiving node is the first node 102/202, a power offset is defined and utilized for determining the power of Msg.3 transmission, such that the transmission power of Msg.3 is determined as the sum of the transmission power of the preamble, the Delta1, and the power offset.

In some arrangements, as shown in FIG. 7, the second node 106/206 sends three SSBs (e.g., the one or more backhaul links 720) (e.g., cell-SSBs) to cover the entire cell. To cover a preset range, the RN 710 sends four SSBs (e.g., the one or more access links 730) (e.g., refined-SSBs), such that the UE 104/204 can access the cell via either the second node 106/206 or the RN 710. In some arrangements, accessing the cell via the RN 710 depends on one or more factors.

In some arrangements, the RN 710 can only forward the cell-SSB received from the second node 106/206 (e.g., cell-SSB0), such that more than one refined SSBs (e.g., refined-SSB#0, refined-SSB#1, refined-SSB#2, and refined-SSB#3, etc.) for access link will carry the same SSB index (e.g., SSB index#0). In some examples, the SSB index information is carried by at least one of PBCH Demodulation Reference Signal (DMRS) sequence and PBCH payload. In some examples, only SSB#0 resource can be used for transmitting refined-SSBs and different refined-SSBs will be transmitted in different periods.

FIG. 14 is a diagram 1400 illustrating an example SSB transmission, according to various arrangements. The diagram 1400 includes cell specific configured period of SSB transmission 1410 and an actual period of SSB transmission 1420. In some examples, the cell specific configured period of SSB transmission 1410 is 5 ms such that, for transmitting 4 refined-SSBs (refined-SSB#O 1430, refined-SSB#1 1432, refined-SSB#2 1434, and refined-SSB#3 1436) in the resource for SSB index#0, the actual period of SSB transmission (e.g., refined-SSB transmission) 1420 will be extended for four times (e.g., each refined-SSB 1430, 1432, 1434, and 1436 is transmitted in independent period). In some arrangements, because all the refined-SSBs 1430, 1432, 1434, and 1436 carry the same SSB index (e.g., the SSB index #0), both the PBCH DMRS sequence and the PBCH payload used by the refined-SSBs 1430, 1432, 1434, and 1436 can only indicate the SSB index #0. In some arrangements, an additional indication manner distinguishes between the refined-SSBs 1430, 1432, 1434, and 1436. As shown in FIG. 14, in an actual transmission period of the refined-SSBs 1420, different refined-SSBs 1430, 1432, 1434, and 1436 are in different radio frames and half frames. In some arrangements, the refined-SSB index may be indicated by binding the system frame number (SFN) and the half frame.

FIG. 15 is a table illustrating an example mapping relationship between the refined-SSB index, the SFN, and the half frame, according to various arrangements. In some arrangements, P is an actual transmission period in terms of frames of the refined-SSB. In some examples, P is equal to a value of 2.

In some arrangements, the transmission period of the cell-SSB is equal to or larger than 10 ms, such that different refined-SSBs will be located within different system frames. In some arrangements, the refined-SSB index may be indicated by the SFN.

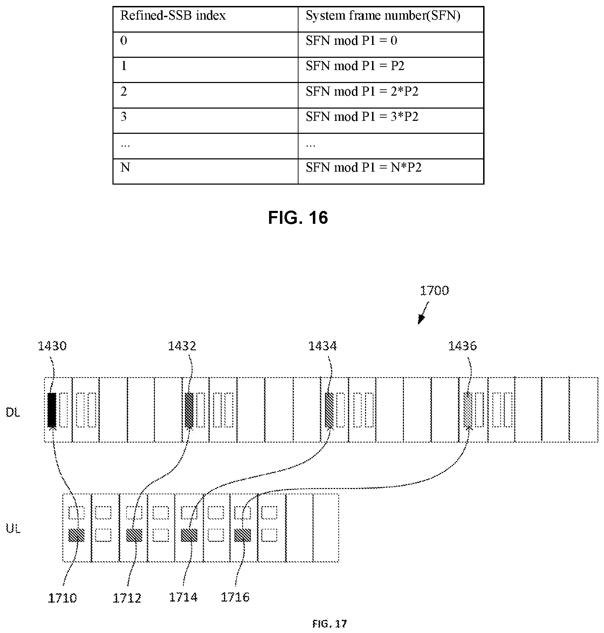

FIG. 16 is a table illustrating another example mapping relationship between the refined-SSB index and the SFN, according to various arrangements. As shown in FIG. 16, P1 is an actual transmission period of the refined-SSB, P2 is a transmission period of the cell-SSB, and N is the refined-SSB index.

In some arrangements, the actual transmitted refined-SSBs is indicated to the UE 104/204. In some examples, the actual transmitted cell-SSBs indication received from the second node 106/206 can be forwarded by RN 710 directly, such that the UE 104/204 will receive that the SSB#0, SSB #1, and SSB #2 are actually transmitted and valid ROs will be associated to the SSB#0, SSB #1, and SSB #2, circularly. In some examples, the actual transmitted SSBs for the access links will be indicated by RN 710, such that signaling 'ssb-PositionsInBurst' will be updated before forwarding. For example, the actual transmitted SSBs indication received from the second node 106/206 is the SSB#0, SSB #1, and SSB #2, but only the SSB#0 is transmitted by itself, so the RN 710 indicates that only the SSB#0 is actually transmitted and all the valid ROs will be associated to the SSB#0.

In some arrangements, the ROs that are associated with the forwarded SSBs (e.g., SSB0) are used for preamble transmitting while the other ROs may be defined as invalid ROs and can be used for other UL transmission. In some arrangements, additional association between the refined beams and the ROs corresponding to the SSB0 is defined.

FIG. 17 is a diagram 1700 illustrating an example mapping relationship between the refined-SSBs 1430, 1432, 1434, and 1436 and the ROs 1710, 1712, 1714, and 1716, according to various arrangements. As shown in FIG. 17, all the refined-SSBs 1430, 1432, 1434, and 1436 are transmitted on the resource for the SSB index#0 and the refined-SSBs 1430, 1432, 1434, and 1436 are associated with the ROs 1710, 1712, 1714, and 1716 associated with the SSB index#0, circularly.

In some arrangements, the RN 710 can only forward the cell-SSB received from the second node 106/206 (e.g., the cell-SSB0) more than one refined SSBs for access link will carry the same SSB index (e.g., all refined-SSBs 1430, 1432, 1434, and 1436 carrying the SSB index#0). In some examples, the SSB index information is carried by at least one PBCH DMRS sequence and PBCH payload. In some examples, the resource for other SSB index can also be used for refined SSBs transmission.

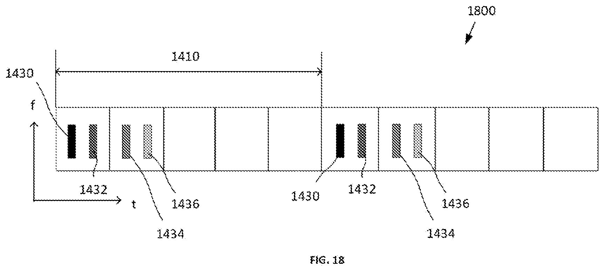

FIG. 18 is a diagram 1800 illustrating an example transmission of the refined-SSBs 1430, 1432, 1434, and 1436, according to various arrangements. In some arrangements, the diagram 1800 includes the cell specific configured period of SSB transmission 1410 being equal to the actual period of refined-SSB transmission 1420. In some arrangements, the refined-SSBs 1430, 1432, 1434, and 1436 will be transmitted in the resource for different SSB indexes (e.g., SSB index#0, SSB index#1, SSB index#2, SSB index#3, etc.). In some arrangements, additional mechanism is defined for indicating the index of refined-SSBs (e.g., PBCH payload), such that if there are at most L refined-SSBs then $\left\lceil \log_2^L \right\rceil$ bits are required for indicating the index of refined-SSB.

In some arrangements, the RN 710 can generate SSBs that are not received from the second node 106/206 (e.g., the SSB1, the SSB2, etc.) and different refined beams can carry different refined-SSB indexes. As shown in FIG. 18, the SSBs resource can be used for refined beams transmissions with the corresponding SSB index. In some examples, the refined-SSB index can be indicated via at least one of PBCH DMRS sequence and PBCH payload.

In some arrangements, the actual transmitted refined-SSBs may be indicated to the UE 104/204. In some examples, the actual transmitted SSBs for access link will be indicated by the RN 710, such that the signaling 'ssb-PositionsInBurst' is updated before forwarding. For example, the actual transmitted SSBs indication received from the second node 106/206 is SSB#0, SSB #1, and SSB #2 but the refined-SSB#0, SSB #1, SSB #2, and SSB #3 are transmitted by themselves, so the RN indicates that refined-SSB#0, SSB #1, SSB #2, and SSB #3 are actually transmitted and the valid ROs will be associated to the refined-SSB#0, SSB #1, SSB #2, and SSB #3, circularly.

**In** some arrangements, according to PRACH reception, the refined-SSB index selected by the UE 104/204 can be identified by the RN 710 and indicated to the second node 106/206. For example, the information (e.g., the refined-SSB index) can be indicated via control-link between the RN 710 and the second node 106/206 and the beam of the subsequent DL transmission to the UE 104/204 can be indicated to the RN 710 accordingly.

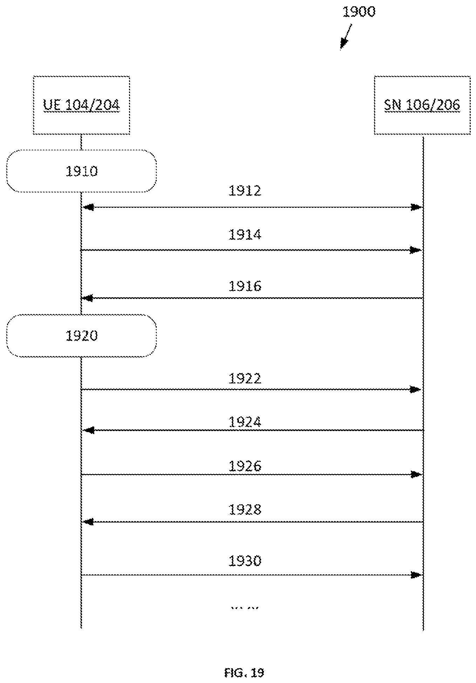

FIG. 19 is a diagram 1900 illustrating an example method for Radio Resource Control (RRC) setup, according to various arrangements. At 1910, the UE 104/204 is RRC idle (e.g., RRC_IDLE). At 1912, the RACH procedure is executed. In some arrangements, the RACH procedure of 1912 includes, at 1914, the UE 104/204 transmitting an RRC setup request (e.g., Msg3 *'RRCSetupRequest,'* etc.) to the second node 106/206. In some arrangements, the RACH procedure of 1912 includes, at 1916, the UE 104/204 receiving an RRC setup (e.g., Msg4 *'RRCSetup,'* etc.) message from the second node 106/206. At 1920, the UE 104/204 is RRC connected (e.g., RRC_CONNECTED). At 1922, the UE 104/204 transmits an RRC setup complete (e.g., Msg5 *'RR CSetup Complete,'* etc.) message to the second node 106/206. In some examples, the RRC setup complete message notifies the second node 106/206 that the UE 104/204 has completed the RRC setup. At 1924, the UE 104/204 receives a capability inquiry (e.g., *'UECapabilityEnquiry,'* etc.) from the second node 106/206. At 1926, the UE 104/204 transmits the capability information of the UE 104/204 (e.g., *'UECapabilityInformation,'* etc.) to the second node 106/206. At 1928, the UE 104/204 receives RRC reconfiguration (e.g., *'RRCReconfiguration,'* etc.) from the second node 106/206. At 1930, the UE 104/204 transmits an RRC reconfiguration complete (e.g., *'RRCReconfiguration Complete,'* etc.) message to the second node 106/206.

In some arrangements, as shown in FIG. 19, after the UE 104/204 performs the RACH procedure (e.g., 4-step RACH procedure, etc.), the network schedules a Msg5 PUSCH transmission to complete the RRC setup. In some arrangements, the network performs the RRC reconfiguration (e.g., at 1928 etc.) according to capability information of the UE 104/204. In some examples, before the capability information of the UE 104/204 is reported, some functions (which need to be determined based on the capability information of the UE 104/204) cannot be configured. In some arrangements, before the first RRC configuration (e.g., the *RRCReconfiguration* message is received by the UE 104/204 at 1928), DCI formats other than 0_0 cannot be used for UL scheduling, such that the Msg5 PUSCH transmission (which is scheduled by the DCI format 0_0 with CRC scrambled by a parameter (e.g., Cell Radio Network Temporary Identifier (C-RNTI), etc.) cannot be scheduled with repetition.

In some arrangements, the Msg5 PUSCH transmission is scheduled by DCI formats (e.g., DCI format 0-1 or 0-2) other than DCI format 0-0, such that the repetition transmission can be used for the Msg5 PUSCH, thereby enhancing the coverage of the Msg5 PUSCH transmission. In some arrangements, the UE 104/204 can report the related capability information of the UE 104/204 in advance, for example, through the Msg3, such that the corresponding configurations can be configured by the network according to the reported capability information of the UE 104/204. In some arrangements, the UE 104/204 can determine the size of information fields of the DCI format other than DCI format 0-0 and further determine the transmission parameter configurations of the scheduled PUSCH in accordance with the indication in the information field. In some arrangements, the reported capability information of the UE 104/204 includes at least one of (i) PUSCH repetition Type A, (ii) PUSCH repetition Type B, (iii) supported Hybrid Automatic Repeat Request Acknowledgement (HARQ-ACK) codebook types (e.g., Dynamic HARQ-ACK codebook and/or Semi-static HARQ-ACK codebook), (iv) PUSCH Multiple Input/Multiple Output (MIMO) transmission capability (e.g., codebook based PUSCH transmission and/or non-codebook based PUSCH transmission), or (v) the maximum number of Orthogonal Frequency-Division Multiplexing (OFDM) symbols for UL front loaded DMRS (1 or 2).

In some arrangements, the UE 104/204 can report request information for Msg5 PUSCH transmission with repetition, such that the Msg5 PUSCH transmission with repetition can be scheduled by DCI format 0-0 and the repetition factor can be indicated via information in the DCI format or configured in Msg2 or SIB1. In some arrangements, the Msg5 PUSCH transmission with repetition can scheduled by a DCI format other than DCI format 0-0 (e.g., DCI format 0-1 or 0-2) and some default capability information of the UE 104/204 related with the PUSCH transmission can be defined. In some arrangements, the default capability information of the UE 104/204 includes at least one of (i) support PUSCH repetition Type A, (ii) support PUSCH repetition Type B, (iii) support at least one of HARQ-ACK codebook types (e.g., Dynamic HARQ-ACK codebook and/or Semi-static HARQ-ACK codebook), (iv) support at least one of PUSCH MIMO transmission mode(e.g., codebook based PUSCH transmission and/or non-codebook based PUSCH transmission), or (v) the maximum number of OFDM symbols for UL front loaded DMRS (1 or 2).

In some arrangements, the UE 104/204 reports a PUSCH repetition transmission capability (e.g., PUSCH repetition type A) for PUSCH scheduled by DCI format 0-0 with CRC scrambled by a parameter (e.g., C-RNTI, etc.) by using the PRACH transmission, information in Msg3 (e.g., a RRC or a Media Access Control (MAC) layer signaling), or the RRC signaling (e.g., capability information of the UE 104/204). In some arrangements, in response to the UE 104/204 requesting the repetition transmission for PUSCH scheduled by DCI format 0-0 with CRC scrambled by the parameter (e.g., C-RNTI, etc.) by using the PRACH transmission, information in Msg3 (a RRC or MAC layer signaling), or the RRC signaling (e.g., capability information of the UE 104/204), the UE 104/204 receives a repetition factor for a PUSCH transmission by the DCI format scheduling the PUSCH. In some examples, two Most Significant Bits (MSBs) of Modulation and Coding Scheme (MCS) field are used for indicating the repetition factor. For example, one of four RRC configured repetition factors can be indicated by the two MSBs.

In some arrangements, information fields in the DCI format, such as Time Domain Resource Allocation (TDRA) field, Frequency Domain Resource Allocation (FDRA) field, etc., can be used for indicating the repetition factor. In some arrangements, flexibility of the information fields is affected. For example, in response to the two MSBs of the MCS field being used to indicate the repetition factor, an indication range of thirty-two MCSs of an original 5-bit MCS field is reduced to eight MCSs. In some arrangements, scheduling modes are defined and include a repetition scheduling mode and a non-repetition scheduling mode. In some examples, for a PUSCH transmission scheduled by a DCI format 0-0 within the repetition scheduling mode, at least part bits of the related information field in the DCI format 0-0 will be interpreted as an indication of the repetition factor. In some examples, for a PUSCH transmission scheduled by a DCI format 0-0 within the non-repetition scheduling mode, the related information field in the DCI format 0-0 does not include an indication of the repetition factor. In some arrangements, conditions are defined to indicate the scheduling mode (e.g., the repetition scheduling mode and the non-repetition scheduling mode). In some examples, when the repetition scheduling mode is indicated or determined, some bit of the related information field (such as MCS field) in the DCI format 0-0 will be re-interpreted as repetition factor information, thereby improving the flexibility of PUSCHs scheduling.

In some arrangements, the scheduling mode (e.g., the repetition scheduling mode and the non-repetition scheduling mode) of a PUSCH scheduled by a DCI format 0-0 (whether at least part bits of an information field in the DCI format 0-0 are re-interpreted as the repetition factor) is determined according to the scheduling mode of another PUSCH scheduled by a non-DCI format 0-0 (e.g., DCI format 0-1 or 0-2). In some arrangements, the non-DCI format 0-0 is the latest non-DCI format before the DCI format 0-0. In some examples, in response to the PUSCH being scheduled by the non-DCI format 0-0 with repetition, the scheduling mode (e.g., the repetition scheduling mode and the non-repetition scheduling mode) of the PUSCH scheduled by the DCI format 0-0 is also scheduled with repetition (e.g., the repetition scheduling mode), such that the repetition factor is indicated by the at least a part bits of an information field in the DCI format 0-0. In some arrangements, a time interval threshold is defined such that, if a time interval between the DCI format 0-0 and the latest non-DCI format 0-0 exceeds the time interval threshold, a default scheduling mode (e.g., one of the repetition scheduling mode or the non-repetition scheduling mode) is selected. In some examples, if the time interval between the DCI format 0-0 and the latest non-DCI format 0-0 does not exceed the time interval threshold, the scheduling mode (e.g., the repetition scheduling mode and the non-repetition scheduling mode) of PUSCH scheduled by the DCI format 0-0 will be determined according to the scheduling mode of the PUSCH scheduled by the latest non-DCI format 0-0.

In some arrangements, the scheduling mode (e.g., the repetition scheduling mode and the non-repetition scheduling mode) of a PUSCH scheduled by a first DCI format 0-0 will follow that of another PUSCH scheduled by a second DCI format 0-0. In some arrangements, the second DCI format 0-0 is the latest DCI format before the first DCI format 0-0. In some examples, a time interval threshold is defined such that, if a time interval between the first DCI format 0-0 and the second DCI format 0-0 exceeds the time interval threshold, a default scheduling mode (e.g., one of the repetition scheduling mode or the non-repetition scheduling mode) is selected. In some examples, if the time interval between the first DCI format 0-0 and the second DCI format 0-0 does not exceed the time interval threshold, the scheduling mode of the PUSCH scheduled by the first DCI format 0-0 will be determined based on the scheduling mode of another PUSCH scheduled by the second DCI format 0-0.

In some arrangements, the scheduling mode (e.g., the repetition scheduling mode and the non-repetition scheduling mode) of a first PUSCH scheduled by a first DCI format 0-0 is determined according to indication information carried in a second PUSCH scheduled by a second DCI format. In some arrangements, the second PUSCH is the latest PUSCH and the second PUSCH carries the indication information before the first PUSCH. In some arrangements, the indication information includes a RRC signaling or a MAC layer signaling (e.g., MAC CE, etc.).

In some arrangements, the scheduling mode (e.g., the repetition scheduling mode and the non-repetition scheduling mode) of a PUSCH scheduled by a DCI format 0-0 is determined according to an indication bit in the DCI format 0-0. In some examples, if a first number of bits for a DCI format 1_0 before padding is larger than a second number of bits for a DCI format 0_0 before padding, one bit for indication will be added after the padding bit(s) of the DCI format 0_0. In some arrangements, one value of the indication bit (e.g., 1 or 0) represents that the PUSCH transmission is within the repetition scheduling mode, such that at least part bits of the related information field will be interpreted as repetition factor indication, and another value of the indication bit (e.g., 0 or 1) represents that the PUSCH transmission is within the non-repetition scheduling mode, such that the indication information in the DCI format does not include indication of the repetition factor.

In some arrangements, the scheduling mode (e.g., the repetition scheduling mode and the non-repetition scheduling mode) of a PUSCH scheduled by a DCI format 0-0 is determined according to a latest downlink measurement result. In some arrangements, the latest downlink measurement result is reported to the second node 106/206 before the DCI format 0-0. In some arrangements, a relationship between the measurement result and the scheduling mode is predefined or configured by the second node 106/206. In some examples, according to the reported measurement result, both of the second node 106/206 and the UE 104/204 can determine the same scheduling mode for the subsequent PUSCH scheduling, such that the UE 104/204 can correctly process the information field in the DCI format 0-0.

While various arrangements of the present disclosure have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one arrangement can be combined with one or more features of another arrangement described herein. Thus, the breadth and scope of the present disclosure should not be limited by any of the above-described illustrative arrangements.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according arrangements of the present solution.

Additionally, memory or other storage, as well as communication components, may be employed in arrangements of the present solution. It will be appreciated that, for clarity purposes, the above description has described arrangements of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A wireless communication method, comprising:

    performing (810), by a wireless communication device, a Random Access Channel, RACH, procedure involving a first node and a second node, wherein the wireless communication device receives downlink data from the second node;
    selecting, by the wireless communication device, a first RACH mode or a second RACH mode (820/826), wherein the first RACH mode comprises transmitting, by the wireless communication device to the first node, a Physical Random Access Channel, PRACH; and the second RACH mode comprises transmitting, by the wireless communication device, the PRACH to the second node; and
    communicating (812) by the wireless communication device with the second node through the first node.

2. The wireless communication method of claim 1, wherein selecting the first RACH mode or the second RACH mode comprises:

    selecting the first RACH mode in response to determining by the wireless communication device that a measurement result of a transmission received from the second node is less or no greater than a threshold or is within a range; or
    selecting the second RACH mode in response to determining by the wireless communication device that the measurement result of the transmission received from the second node is greater or no less than the threshold or is outside of the range; or
    selecting one of the first RACH mode or the second RACH mode in response to failing the RACH procedure for a number of attempts using another one of the first RACH mode or the second RACH mode, the number of attempts is equal to or greater than a threshold; or

selecting one of the first RACH mode or the second RACH mode in response to power of a preamble transmission in another one of the first RACH mode or the second RACH mode reaching a predefined value, wherein the predefined value comprises a maximum transmission power of the preamble transmission configured by the second node.

3. The wireless communication method of claim 1, wherein the first RACH mode or the second RACH mode is selected for a Synchronization Signal/PBCH Block, SSB, or a Channel State Information - Reference Signal, CSI-RS.

4. The wireless communication method of claim 1, comprising selecting, by the wireless communication device, a first transmission link for the RACH procedure or a second transmission link for a Physical Random Access Channel, PRACH, transmission, wherein

the first transmission link is between the wireless communication device and the first node; and
the second transmission link is between the wireless communication device and the second node.

5. The wireless communication method of claim 1, comprising selecting a reception/transmission beam pair by attempting a plurality of reception/transmission beam pairs, wherein the reception/transmission beam pair is used for sending uplink transmission from the wireless communication device to the first node.

6. The wireless communication method of claim 5, comprising transmitting, by the wireless communication device to the network, a preamble using a transmission beam of each of the plurality of reception/transmission beam pairs, wherein each of the plurality of reception/transmission beam pairs comprises one of a plurality of reception beams and one of a plurality of transmission beams, the transmission beam is one of the plurality of transmission beams, and the network receives the preamble using a reception beam of each of the plurality of reception/transmission beam pairs, where the reception beam is one of the plurality of reception beams.

7. The wireless communication method of claim 6, wherein

the preamble is transmitted in a group of RACH Occasions, ROs, using the plurality of reception/transmission beam pairs, each RO in the group of ROs corresponds to each of the plurality of reception/transmission beam pairs; or
the preamble is transmitted in a plurality of groups of RACH Occasions, ROs, using the plurality of reception/transmission beam pairs, each of the plurality of groups of ROs corresponds to a transmission beam of the plurality of transmission beams.

8. The wireless communication method of claim 1, comprising receiving, by the wireless communication device from the second node, a Random Access Response, RAR, wherein the RAR indicates a transmission beam with which the wireless communication device transmits an uplink transmission, and the RAR indicates the transmission beam using an RACH Occasion, RO, index within an RO group.

9. The method of claim 8, wherein

the RAR is carried on a downlink channel scheduled by a Downlink Control Information, DCI, format having a Cyclic Redundancy Check, CRC, scrambled by a parameter; and
the parameter is determined according to a time-domain location of at least one RO in the RO group.

10. The method of claim 9, wherein

the RO group comprises a number Q of ROs; and
a number of bits in the RAR used to indicate the RO index within the RO group can be determined using $|\log_2 Q|$, where Q is a positive integer, or a number of bits in the RAR used to indicate the RO index can be determined using $\log_2 Q$, where Q is a positive integer and is a power of 2.

11. The wireless communication method of claim 1, comprising:

receiving, by the wireless communication device from the second node, a Random Access Response, RAR); and
determining, by the wireless communication device, a transmission time for an uplink transmission transmitted by the wireless communication device after receiving the RAR.

12. The wireless communication method of claim 11, further comprising:

determining, by the wireless communication device, a Timing Advance, TA, for the uplink transmission relative to a downlink receiving timing at which the RAR is received;

in response to selecting a first RACH mode, a value of a timing advance offset provided in System Information Block, SIB, is omitted for determining the TA; and

in response to selecting a second RACH mode, the value of the timing advance offset provided in the SIB is used for determining the TA, wherein the first RACH mode comprises transmitting, by the wireless communication device to the first node, a Physical Random Access Channel, PRACH, and the second RACH mode comprises transmitting, by the wireless communication device, the PRACH to the second node.

13. The wireless communication method of claim 11, wherein the RAR comprises a Timing Advance, TA, for the uplink transmission relative to a time by which the RAR is received, wherein

the TA can be determined as a sum of a transmission time between the second node and the wireless communication device and a transmission time between the wireless communication device and the first node; or

the TA can be determined as a sum of a transmission time between the second node and the wireless communication device, a transmission time between the wireless communication device and the first node, and an offset, the offset being at least one of: a transmission delay between the second node and the first node, a timing difference between a reception timing of the first node and a frame boundary of the first node, or a processing time of the first node.

14. A wireless communication device, comprising:
at least one processor configured to perform the wireless communication method of any one of claims 1 to 13.


**Patentansprüche**

1. Drahtloses Kommunikationsverfahren, aufweisend:

Durchführen (810), durch eine drahtlose Kommunikationsvorrichtung, einer Direktzugriffskanal-Prozedur, RACH-Prozedur, die einen ersten Knoten und einen zweiten Knoten einbezieht, wobei die drahtlose Kommunikationsvorrichtung Downlink-Daten von dem zweiten Knoten empfängt;

Auswählen, durch die drahtlose Kommunikationsvorrichtung, eines ersten RACH-Modus oder eines zweiten RACH-Modus (820/826), wobei der erste RACH-Modus ein Übertragen, durch die drahtlose Kommunikationsvorrichtung an den ersten Knoten eines physikalischen Direktzugriffskanals, PRACH, aufweist; und der zweite RACH-Modus ein Übertragen, durch die drahtlose Kommunikationsvorrichtung, des PRACH an den zweiten Knoten aufweist; und

Kommunizieren (812), durch die drahtlose Kommunikationsvorrichtung, mit dem zweiten Knoten über den ersten Knoten.

2. Drahtloses Kommunikationsverfahren nach Anspruch 1, wobei das Auswählen des ersten RACH-Modus oder des zweiten RACH-Modus aufweist:

Auswählen des ersten RACH-Modus als Reaktion auf ein Bestimmen, durch die drahtlose Kommunikationsvorrichtung, dass ein Messergebnis einer von dem zweiten Knoten empfangenen Übertragung kleiner oder nicht größer als eine Schwelle ist oder innerhalb eines Bereichs liegt; oder

Auswählen des zweiten RACH-Modus als Reaktion auf ein Bestimmen, durch die drahtlose Kommunikationsvorrichtung, dass das Messergebnis der von dem zweiten Knoten empfangenen Übertragung größer oder nicht kleiner als die Schwelle ist oder außerhalb des Bereichs liegt; oder

Auswählen eines von dem ersten RACH-Modus oder dem zweiten RACH-Modus als Reaktion auf ein Fehlschlagen der RACH-Prozedur für eine Anzahl von Versuchen unter Verwendung eines anderen von dem ersten RACH-Modus oder dem zweiten RACH-Modus, wobei die Anzahl von Versuchen gleich einer oder größer als eine Schwelle ist; oder

Auswählen eines von dem ersten RACH-Modus oder dem zweiten RACH-Modus als Reaktion darauf, dass eine Leistung einer Präambelübertragung in einem anderen des ersten RACH-Modus oder des zweiten RACH-Modus einen vorgegebenen Wert erreicht, wobei der vorgegebene Wert eine maximale Übertragungsleistung der Präambelübertragung aufweist, die durch den zweiten Knoten konfiguriert ist.

3. Drahtloses Kommunikationsverfahren nach Anspruch 1, wobei der erste RACH-Modus oder der zweite RACH-Modus für einen Synchronisationssignal/PBCH-Block, SSB, oder ein Kanalzustandsinformations-Referenzsignal, CSI-RS, ausgewählt wird.

4. Drahtloses Kommunikationsverfahren nach Anspruch 1, aufweisend das Auswählen, durch die drahtlose Kommunikationsvorrichtung, einer ersten Übertragungsverbindung für die RACH-Prozedur oder einer zweiten Übertragungsverbindung für eine Physikalischer-Direktzugriffskanal-Übertragung, PRACH-Übertragung, wobei

die erste Übertragungsverbindung zwischen der drahtlosen Kommunikationsvorrichtung und dem ersten Knoten liegt; und
die zweite Übertragungsverbindung zwischen der drahtlosen Kommunikationsvorrichtung und dem zweiten Knoten liegt.

5. Drahtloses Kommunikationsverfahren nach Anspruch 1, aufweisend das Auswählen eines Empfangs-/Übertragungsstrahlpaars durch ein Versuchen mehrerer Empfangs-/Übertragungsstrahlpaare, wobei das Empfangs- /Übertragungsstrahlpaar zum Senden einer Uplink-Übertragung von der drahtlosen Kommunikationsvorrichtung an den ersten Knoten verwendet wird.

6. Drahtloses Kommunikationsverfahren nach Anspruch 5, aufweisend das Übertragen, durch die drahtlose Kommunikationsvorrichtung an das Netzwerk, einer Präambel unter Verwendung eines Übertragungsstrahls jedes der mehreren Empfangs-/Übertragungsstrahlpaare, wobei jedes der mehreren Empfangs-/Übertragungsstrahlpaare einen aus mehreren Empfangsstrahlen und einen aus mehreren Übertragungsstrahlen aufweist, der Übertragungsstrahl einer aus den mehreren Übertragungsstrahlen ist und das Netzwerk die Präambel unter Verwendung eines Empfangsstrahls jedes der mehreren Empfangs-/Übertragungsstrahlpaare empfängt, wobei der Empfangsstrahl einer aus den mehreren Empfangsstrahlen ist.

7. Drahtloses Kommunikationsverfahren nach Anspruch 6, wobei

die Präambel in einer Gruppe von RACH-Gelegenheiten, ROs, unter Verwendung der mehreren Empfangs-/Übertragungsstrahlpaare übertragen wird, wobei jede RO in der Gruppe von ROs jedem der mehreren Empfangs-/Übertragungsstrahlpaare entspricht; oder
die Präambel in mehreren Gruppen von RACH-Gelegenheiten, ROs, unter Verwendung der mehreren Empfangs-/Übertragungsstrahlpaare übertragen wird, wobei jede der mehreren Gruppen von ROs einem Übertragungsstrahl der mehreren Übertragungsstrahlen entspricht.

8. Drahtloses Kommunikationsverfahren nach Anspruch 1, aufweisend das Empfangen, durch die drahtlose Kommunikationsvorrichtung von dem zweiten Knoten, einer Direktzugriffsantwort, RAR, wobei die RAR einen Übertragungsstrahl angibt, mit dem die drahtlose Kommunikationsvorrichtung eine Uplink-Übertragung überträgt, und die RAR den Übertragungsstrahl unter Verwendung eines RACH-Gelegenheits-Index, RO-Index, innerhalb einer RO-Gruppe angibt.

9. Verfahren nach Anspruch 8, wobei

die RAR auf einem Downlink-Kanal getragen wird, der durch ein Downlink-Steuerinformationsformat, DCI-Format, geplant wird, das eine zyklische Redundanzprüfung, CRC, aufweist, die durch einen Parameter verwürfelt wird; und
der Parameter gemäß einer Zeitdomänenposition mindestens einer RO in der RO-Gruppe bestimmt wird.

10. Verfahren nach Anspruch 9, wobei

die RO-Gruppe eine Anzahl Q von ROs aufweist; und
eine Anzahl von Bits in der RAR, die zum Angeben des RO-Index innerhalb der RO-Gruppe verwendet wird, unter Verwendung von $|\log_2 Q|$ bestimmt werden kann, wobei Q eine positive ganze Zahl ist, oder eine Anzahl von Bits in der RAR, die zum Angeben des RO-Index verwendet wird, unter Verwendung von $\log_2 Q$ bestimmt werden kann, wobei Q eine positive ganze Zahl ist und eine Zweierpotenz ist.

**11.** Drahtloses Kommunikationsverfahren nach Anspruch 1, aufweisend:

Empfangen, durch die drahtlose Kommunikationsvorrichtung von dem zweiten Knoten, einer Direktzugriffsantwort, RAR, und

Bestimmen, durch die drahtlose Kommunikationsvorrichtung, einer Übertragungszeit für eine Uplink-Übertragung, die durch die drahtlose Kommunikationsvorrichtung nach dem Empfangen der RAR übertragen wird.

**12.** Drahtloses Kommunikationsverfahren nach Anspruch 11, ferner aufweisend:

Bestimmen, durch die drahtlose Kommunikationsvorrichtung, eines Timing Advance, TA, für die Uplink-Übertragung relativ zu einem Downlink-Empfangszeitpunkt, zu dem die RAR empfangen wird;
wobei als Reaktion auf das Auswählen eines ersten RACH-Modus ein Wert eines in einem Systeminformationsblock, SIB, bereitgestellten Timing-Advance-Versatzes zum Bestimmen des TA weggelassen wird; und
wobei als Reaktion auf das Auswählen eines zweiten RACH-Modus der Wert des in dem SIB bereitgestellten Timing-Advance-Versatzes zum Bestimmen des TA verwendet wird, wobei der erste RACH-Modus ein Übertragen, durch die drahtlose Kommunikationsvorrichtung an den ersten Knoten, eines physikalischen Direktzugriffskanals, PRACH, aufweist und der zweite RACH-Modus ein Übertragen, durch die drahtlose Kommunikationsvorrichtung, des PRACH an den zweiten Knoten aufweist.

**13.** Drahtloses Kommunikationsverfahren nach Anspruch 11, wobei die RAR einen Timing Advance, TA, für die Uplink-Übertragung relativ zu einer Zeit aufweist, zu der die RAR empfangen wird, wobei

der TA als eine Summe einer Übertragungszeit zwischen dem zweiten Knoten und der drahtlosen Kommunikationsvorrichtung und einer Übertragungszeit zwischen der drahtlosen Kommunikationsvorrichtung und dem ersten Knoten bestimmt werden kann; oder
der TA als eine Summe einer Übertragungszeit zwischen dem zweiten Knoten und der drahtlosen Kommunikationsvorrichtung, einer Übertragungszeit zwischen der drahtlosen Kommunikationsvorrichtung und dem ersten Knoten und einem Versatz bestimmt werden kann, wobei der Versatz mindestens eines ist von: einer Übertragungsverzögerung zwischen dem zweiten Knoten und dem ersten Knoten, einer Zeitdifferenz zwischen einem Empfangszeitpunkt des ersten Knotens und einer Rahmengrenze des ersten Knotens oder einer Verarbeitungszeit des ersten Knotens.

**14.** Drahtlose Kommunikationsvorrichtung, aufweisend:
mindestens einen Prozessor, der konfiguriert ist, um das drahtlose Kommunikationsverfahren nach einem der Ansprüche 1 bis 13 durchzuführen.

**Revendications**

**1.** Procédé de communication sans fil, comprenant :

la réalisation (810), par un dispositif de communication sans fil, d'une procédure de canal d'accès aléatoire, RACH, impliquant un premier nœud et un second nœud, dans lequel le dispositif de communication sans fil reçoit des données de liaison descendante en provenance du second nœud ;
la sélection, par le dispositif de communication sans fil, d'un premier mode RACH ou d'un second mode RACH (820/826), dans lequel le premier mode RACH comprend la transmission, par le dispositif de communication sans fil au premier nœud, d'un canal d'accès aléatoire physique, PRACH ; et le second mode RACH comprend la transmission, par le dispositif de communication sans fil, du PRACH au second nœud ; et
la communication (812), par le dispositif de communication sans fil, avec le second nœud par le biais du premier nœud.

**2.** Procédé de communication sans fil selon la revendication 1, dans lequel la sélection du premier mode RACH ou du second mode RACH comprend :

la sélection du premier mode RACH en réponse au fait de déterminer, par le dispositif de communication sans fil, qu'un résultat de mesure d'une transmission reçue en provenance du second nœud est inférieur ou non supérieur à un seuil ou se situe dans une plage ; ou
la sélection du second mode RACH en réponse au fait de déterminer, par le dispositif de communication sans fil, que le résultat de mesure de la transmission reçue en provenance du second nœud est supérieur ou non inférieur au seuil ou se situe en dehors de la plage ; ou

la sélection d'un parmi le premier mode RACH ou le second mode RACH en réponse à un échec de la procédure RACH pour un nombre de tentatives à l'aide d'un autre parmi le premier mode RACH ou le second mode RACH, le nombre de tentatives est égal ou supérieur à un seuil ; ou

la sélection d'un parmi le premier mode RACH ou le second mode RACH en réponse à une puissance d'une transmission de préambule dans un autre parmi le premier mode RACH ou le second mode RACH atteignant une valeur prédéfinie, dans lequel la valeur prédéfinie comprend une puissance de transmission maximale de la transmission de préambule configurée par le second nœud.

3. Procédé de communication sans fil selon la revendication 1, dans lequel le premier mode RACH ou le second mode RACH est sélectionné pour un bloc PBCH/de signal de synchronisation, SSB, ou un signal de référence d'informations d'état de canal, CSI-RS.

4. Procédé de communication sans fil selon la revendication 1, comprenant la sélection, par le dispositif de communication sans fil, d'une première liaison de transmission pour la procédure RACH ou d'une seconde liaison de transmission pour une transmission de canal d'accès aléatoire physique, PRACH, dans lequel

la première liaison de transmission se situe entre le dispositif de communication sans fil et le premier nœud ; et
la seconde liaison de transmission se situe entre le dispositif de communication sans fil et le second nœud.

5. Procédé de communication sans fil selon la revendication 1, comprenant la sélection d'une paire de faisceaux de réception/transmission en tentant une pluralité de paires de faisceaux de réception/transmission, dans lequel la paire de faisceaux de réception/transmission est utilisée pour envoyer une transmission de liaison montante du dispositif de communication sans fil au premier nœud.

6. Procédé de communication sans fil selon la revendication 5, comprenant la transmission, par le dispositif de communication sans fil au réseau, d'un préambule à l'aide d'un faisceau de transmission de chacune de la pluralité de paires de faisceaux de réception/transmission, dans lequel chacune de la pluralité de paires de faisceaux de réception/transmission comprend un parmi une pluralité de faisceaux de réception et un parmi une pluralité de faisceaux de transmission, le faisceau de transmission est un parmi la pluralité de faisceaux de transmission, et le réseau reçoit le préambule à l'aide d'un faisceau de réception de chacune de la pluralité de paires de faisceaux de réception/transmission, le faisceau de réception étant un parmi la pluralité de faisceaux de réception.

7. Procédé de communication sans fil selon la revendication 6, dans lequel

le préambule est transmis dans un groupe d'occasions RACH, RO, à l'aide de la pluralité de paires de faisceaux de réception/transmission, chaque RO dans le groupe de RO correspond à chacune de la pluralité de paires de faisceaux de réception/transmission ; ou
le préambule est transmis dans une pluralité de groupes d'occasions RACH, RO, à l'aide de la pluralité de paires de faisceaux de réception/transmission, chacun de la pluralité de groupes de RO correspond à un faisceau de transmission de la pluralité de faisceaux de transmission.

8. Procédé de communication sans fil selon la revendication 1, comprenant la réception, par le dispositif de communication sans fil en provenance du second nœud, d'une réponse d'accès aléatoire, RAR, dans lequel la RAR indique un faisceau de transmission avec lequel le dispositif de communication sans fil transmet une transmission de liaison montante, et la RAR indique le faisceau de transmission à l'aide d'un indice d'occasion RACH, RO, au sein d'un groupe RO.

9. Procédé selon la revendication 8, dans lequel

la RAR est transportée sur un canal de liaison descendante planifié par un format d'informations de commande de liaison descendante, DCI, ayant un contrôle de redondance cyclique, CRC, brouillé par un paramètre ; et
le paramètre est déterminé selon un emplacement dans le domaine temporel d'au moins une RO dans le groupe RO.

10. Procédé selon la revendication 9, dans lequel

le groupe RO comprend un nombre Q de RO ; et

un nombre de bits dans la RAR utilisée pour indiquer l'indice RO au sein du groupe RO peut être déterminé à l'aide de $\lfloor log_2 Q \rfloor$, Q étant un nombre entier positif, ou un nombre de bits dans la RAR utilisée pour indiquer l'indice RO peut être déterminé à l'aide de $log_2 Q$, Q étant un nombre entier positif et est une puissance de 2.

11. Procédé de communication sans fil selon la revendication 1, comprenant :

la réception, par le dispositif de communication sans fil en provenance du second nœud, d'une réponse d'accès aléatoire, RAR ; et

la détermination, par le dispositif de communication sans fil, d'un moment de transmission pour une transmission de liaison montante transmise par le dispositif de communication sans fil après la réception de la RAR.

12. Procédé de communication sans fil selon la revendication 11, comprenant en outre :

la détermination, par le dispositif de communication sans fil, d'une avance de synchronisation, TA, pour la transmission de liaison montante par rapport à une synchronisation de réception de liaison descendante à laquelle la RAR est reçue ;

en réponse à la sélection d'un premier mode RACH, une valeur d'un décalage d'avance de synchronisation fournie dans le bloc d'informations système, SIB, est omise pour la détermination de la TA; et

en réponse à la sélection d'un second mode RACH, la valeur du décalage d'avance de synchronisation fournie dans le SIB est utilisée pour déterminer la TA, dans lequel le premier mode RACH comprend la transmission, par le dispositif de communication sans fil au premier nœud, d'un canal d'accès aléatoire physique, PRACH, et le second mode RACH comprend la transmission, par le dispositif de communication sans fil, du PRACH au second nœud.

13. Procédé de communication sans fil selon la revendication 11, dans lequel la RAR comprend une avance de synchronisation, TA, pour la transmission de liaison montante par rapport à un moment auquel la RAR est reçue, dans lequel

la TA peut être déterminée en tant que somme d'un moment de transmission entre le second nœud et le dispositif de communication sans fil et d'un moment de transmission entre le dispositif de communication sans fil et le premier nœud ; ou

la TA peut être déterminée en tant que somme d'un moment de transmission entre le second nœud et le dispositif de communication sans fil, d'un moment de transmission entre le dispositif de communication sans fil et le premier nœud, et d'un décalage, le décalage étant au moins l'un parmi : un délai de transmission entre le second nœud et le premier nœud, une différence de synchronisation entre une synchronisation de réception du premier nœud et une limite de trame du premier nœud, ou un moment de traitement du premier nœud.

14. Dispositif de communication sans fil, comprenant :
au moins un processeur configuré pour réaliser le procédé de communication sans fil selon l'une quelconque des revendications 1 à 13.

FIG. 1

FIG. 2

FIG. 3

| PRACH Configuration Index | Preamble format | $n_f \bmod x = y$ | | Subframe number | Starting symbol | Number of PRACH slots within a subframe | $N_t^{\mathrm{RA,slot}}$, number of time-domain PRACH occasions within a PRACH slot | $N_{\mathrm{dur}}^{\mathrm{RA}}$, PRACH duration |
|---|---|---|---|---|---|---|---|---|
| | | $x$ | $y$ | | | | | |
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| 5 | 0 | 8 | 1 | 4 | 0 | - | - | 0 |
| 6 | 0 | 8 | 1 | 7 | 0 | - | - | 0 |
| 7 | 0 | 8 | 1 | 9 | 0 | - | - | 0 |
| 8 | 0 | 4 | 1 | 1 | 0 | - | - | 0 |
| 9 | 0 | 4 | 1 | 4 | 0 | - | - | 0 |
| | | | | ... | | | | |

FIG. 4

| Preamble SCS | $N_{gap}$ |
|---|---|
| 1.25 kHz or 5 kHz | 0 |
| 15 kHz or 30 kHz or 60 kHz or 120 kHz | 2 |
| 480 kHz | 8 |
| 960 kHz | 16 |

**FIG. 5**

FIG. 6

SN 106/206

720

720

SSB2

SSB1

SSB0

700

710

730

RN

0

1

730

730

3

2

730

730

FIG. 7

800

UE 104/204

SN 106/206

FN 102/202

Perform a RACH procedure involving a first node and a second node

810

Perform a RACH procedure involving a first node and a second node

810

Perform a RACH procedure involving a first node and a second node

810

820

Transmit to the second node the PRACH

Receive the PRACH from UE

822

OR

828

Receive the PRACH from UE

Transmit to the first node the PRACH

826

812

Communicate with the second node through the first node

Communicate with the second node through the first node

812

FIG. 8A

800

**UE 104/204**

810 — Perform a RACH procedure involving a first node and a second node

820 — Transmit to the second node the PRACH

OR

826 — Transmit to the first node the PRACH

812 — Communicate with the second node through the first node

**SN 106/206**

Send to UE a transmission

Send to UE a transmission with a measurement result that is (i) greater or no less than the threshold, or (ii) outside of the range

818

Send to UE a transmission with a measurement result that is (i) less or no greater than the threshold, or (ii) within the range

824

FIG. 8B

FIG. 9

SN 106/206

1000

T3

T1

FN 102/202

T2

UE 104/204

FIG. 10

FIG. 11

| case | SS-RSRP | P_offset |
|------|---------|----------|
| 1 | X < Threshold or X ≤ Threshold | P_offset |
| 2 | Threshold ≤ X or Threshold < X | 0 |

FIG. 12

| case | SS-RSRP | P_offset |
|---|---|---|
| 1 | X < Threshold1 or X ≤ Threshold1 | P_offset1 |
| 2 | Threshold1 ≤ X < Threshold2 or Threshold1 < X ≤ Threshold2 | P_offset2 |
| 3 | X ≥ Threshold2 or X > Threshold2 | 0 |

**FIG. 13**

FIG. 14

| Refined-SSB index | System frame number(SFN) | Half frame(first/second) |
|---|---|---|
| 0 | SFN mod P = 0 | First |
| 1 | SFN mod P = 0 | Second |
| 2 | SFN mod P = 1 | First |
| 3 | SFN mod P = 1 | Second |

**FIG. 15**

| Refined-SSB index | System frame number(SFN) |
|---|---|
| 0 | SFN mod P1 = 0 |
| 1 | SFN mod P1 = P2 |
| 2 | SFN mod P1 = 2*P2 |
| 3 | SFN mod P1 = 3*P2 |
| ... | ... |
| N | SFN mod P1 = N*P2 |

## FIG. 16

FIG. 17

FIG. 18

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022205070 A1

- US 2022053433 A1